(19) **Europäisches Patentamt European Patent Office Office européen des brevets**

(11) **EP 4 668 114 A1**

(12) **EUROPEAN PATENT APPLICATION**
published in accordance with Art. 153(4) EPC

(43) Date of publication:
**24.12.2025 Bulletin 2025/52**

(21) Application number: **24769732.9**

(22) Date of filing: **23.02.2024**

(51) International Patent Classification (IPC):
**G06F 9/50** (2006.01)

(52) Cooperative Patent Classification (CPC):
**G06F 9/48; G06F 9/50; G06F 16/2455; G06F 16/27**

(86) International application number:
**PCT/CN2024/078364**

(87) International publication number:
**WO 2024/188037 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.03.2023 CN 202310231686**
**21.06.2023 CN 202310745731**

(71) Applicants:
• **Huawei Cloud Computing Technologies Co., Ltd. Guiyang, Guizhou 550025 (CN)**
• **Tianjin University Tianjin 300072 (CN)**

(72) Inventors:
• **HAO, Yuechan Guiyang, Guizhou 550025 (CN)**
• **ZHAO, Laiping Tianjin 300072 (CN)**
• **YANG, Yanan Tianjin 300072 (CN)**
• **MA, Yuchi Guiyang, Guizhou 550025 (CN)**
• **LI, Keqiu Tianjin 300072 (CN)**

(74) Representative: **Thun, Clemens Mitscherlich PartmbB Patent- und Rechtsanwälte Karlstraße 7 80333 München (DE)**

(54) **FUNCTION CACHING METHOD AND SYSTEM**

(57) Embodiments of this application provide a function cache method and apparatus. The method includes: A primary controller sends first indication information to a first sub-controller in a plurality of sub-controllers, where the first indication information is used to determine a cache policy for an instance on a first computing node in a cluster; the first sub-controller performs instance caching on the instance on the first computing node based on the first indication information; the primary controller sends second indication information to a second sub-controller in the plurality of sub-controllers, where the second indication information is used to determine a cache policy for an instance on a second computing node in the cluster; and the second sub-controller performs instance caching on the instance on the second computing node based on the second indication information. The solutions in embodiments of this application help avoid a waste of cache resources while reducing the incidence of cold start invocation.

FIG. 6

## Description

This application claims priorities to Chinese Patent Application No. 202310231686.4, filed with the China National Intellectual Property Administration on March 10, 2023 and entitled "FUNCTION CACHE METHOD AND APPARATUS", and to Chinese Patent Application No. 202310745731.8, filed with the China National Intellectual Property Administration on June 21, 2023 and entitled "FUNCTION CACHE METHOD AND SYSTEM", both of which are incorporated herein by reference in their entireties.

## TECHNICAL FIELD

Embodiments of this application relate to the field of cloud computing technologies, and more specifically, to a function cache method and system.

## BACKGROUND

Serverless computing has become an increasingly popular cloud computing development paradigm by virtue of advantages of zero maintenance for users, on-demand charging, elastic scalability, and the like. When an invocation request for a function arrives, a serverless computing platform may provide a service via a corresponding function instance. If there is no available function instance in a node of the serverless computing platform upon arrival of the invocation request for the function, cold start invocation is triggered. Currently, time required for cold start invocation of function instances based on lightweight containers generally ranges from hundreds of milliseconds to hundreds of seconds, introducing significant response latency in function services and adversely affecting service experience of users.

Function instance caching is a widely used method for reducing cold start invocation. This approach entails retaining a function instance post-execution of an invocation request rather than releasing it immediately; instead, keeping it active in the node's cache for a period of time allows subsequent requests arriving shortly thereafter to reuse the same instance, thus avoiding cold starts. In existing solutions, nodes attempt to cache as many instances as possible to minimize the incidence of cold starts. However, this strategy often leads to cache redundancy, incurring unnecessary storage costs and squandering node resources.

Therefore, a pressing challenge lies in striking a balance between maintaining a low frequency of cold start occurrences and preventing a waste of cache resources.

## SUMMARY

Embodiments of this application provide a function cache method and system, to help avoid a waste of cache resources while reducing the incidence of cold start invocation.

According to a first aspect, a function cache method is provided, including: A primary controller sends first indication information to a first sub-controller in a plurality of sub-controllers, where the first indication information is used to determine a cache policy for an instance on a first computing node in a cluster; the first sub-controller performs instance caching on the instance on the first computing node based on the first indication information; the primary controller sends second indication information to a second sub-controller in the plurality of sub-controllers, where the second indication information is used to determine a cache policy for an instance on a second computing node in the cluster; and the second sub-controller performs instance caching on the instance on the second computing node based on the second indication information.

In the solution of embodiments of this application, the primary controller manages a cache policy for an instance on each computing node. In this way, the cache policy for the instance on each computing node can be determined or adjusted based on global information. This helps reduce unnecessary instance caching while reducing the incidence of cold start invocation, thereby reducing cache redundancy. In addition, cache resources of each computing node can be properly used, to alleviate a load imbalance problem, thereby reducing cache contention in the node. For example, the primary controller may determine or adjust the cache policy for the instance on each computing node based on a status of each computing node and/or invocation information of each function, to indicate a sub-controller to perform corresponding processing.

The first sub-controller and the second sub-controller are different sub-controllers. The first computing node and the second computing node are different computing nodes.

For example, the first indication information and the second indication information may be the same or may be different.

For example, the first indication information may be a global hotspot function list. The second indication information may be a global hotspot function list.

With reference to the first aspect, in some implementations of the first aspect, the first sub-controller is deployed on the first computing node, the second sub-controller is deployed on the second computing node, and the primary controller is deployed on a control node.

The control node is a node different from a computing node.

For example, that the first sub-controller performs instance caching on the instance on the first computing node based on the first indication information may include at least one of the following: The first sub-controller caches an uncached instance on the first computing node based on the first indication information, the first sub-controller releases a cached instance on the first computing node based on the first indication information, or the first sub-controller adjusts a cache policy for a cached instance on the first computing node based on the first indication information.

With reference to the first aspect, in some implementations of the first aspect, a memory of the first computing node includes a first area and a second area.

An instance of a first function on the first computing node is cached in the first area before the primary controller sends the first indication information to the first sub-controller in the plurality of sub-controllers, and that the first sub-controller performs instance caching on the instance on the first computing node based on the first indication information includes: The first sub-controller transfers the instance of the first function from the first area to the second area. Alternatively, an instance of a second function on the first computing node is cached in the second area before the primary controller sends the first indication information to the first sub-controller in the plurality of sub-controllers, and that the first sub-controller performs instance caching on the instance on the first computing node based on the first indication information includes: The first sub-controller transfers the instance of the second function from the second area to the first area.

With reference to the first aspect, in some implementations of the first aspect, target cache duration of an instance cached in the first area is greater than target cache duration of an instance cached in the second area.

In embodiments of this application, a cache location of an instance of a function may be adjusted according to a cache policy for the instance, that is, target cache duration of the function may be adjusted. This helps further improve cache resource utilization. For example, if a quantity of original invocation requests for the function is small, the instance of the function may be cached in the second area. When the invocation requests for the function increase, the cache policy may be adjusted to transfer the instance of the function from the second area to the first area. If a quantity of original invocation requests for the function is large, the instance of the function may be cached in the first area. When the invocation requests for the function decrease, the cache policy may be adjusted to transfer the instance of the function from the first area to the second area. In this way, a fluctuation status of the invocation requests for the function can be adapted, to help further improve cache resource utilization.

With reference to the first aspect, in some implementations of the first aspect, the cache policy for the instance on the first computing node includes target cache duration of an instance of at least one function on the first computing node, the first indication information indicates a type of the at least one function, the type of the at least one function includes a hotspot function or a non-hotspot function, and in the at least one function, target cache duration of an instance of a function of the hotspot function type is greater than target cache duration of an instance of a function of the non-hotspot function type.

In the solution of embodiments of this application, the hotspot function and the non-hotspot function are distinguished. Target cache duration of the hotspot function is greater than target cache duration of the non-hotspot function, that is, a resource is preferentially allocated to cache the hotspot function. This helps avoid a waste of cache resources while reducing the incidence of cold start invocation, that is, helps improve cache resource utilization. In addition, functions are classified into the hotspot function and the non-hotspot function, and target cache duration of an instance of a function can be determined based on a type of the function, so that implementation is more convenient and efficient.

With reference to the first aspect, in some implementations of the first aspect, the target cache duration corresponding to the non-hotspot function is greater than 0.

In the solution of embodiments of this application, a cache resource may be allocated to the non-hotspot function for caching. This helps reduce a decision error caused by insufficient hotness recognition precision or latency, and helps reduce an occurrence frequency of cold start.

With reference to the first aspect, in some implementations of the first aspect, the target cache duration corresponding to the hotspot function is not limited by a lifecycle.

With reference to the first aspect, in some implementations of the first aspect, a memory of the first computing node includes a first area and a second area, the first area is used to cache an instance of a function of the hotspot function type on the first computing node, and the second area is used to cache an instance of a function of the non-hotspot function type on the first computing node.

With reference to the first aspect, in some implementations of the first aspect, the at least one function includes a first function, an instance of the first function is cached in the first area before the primary controller sends the first indication information to the first sub-controller in the plurality of sub-controllers, the first indication information indicates that a type of the first function is the non-hotspot function, and that the first sub-controller performs instance caching on the instance on the first computing node based on the first indication information includes: The first sub-controller transfers the instance of the first function from the first area to the second area. Alternatively, the at least one function includes a second function, an instance of the second function is cached in the second area before the primary controller sends the first indication information to the first sub-controller in the plurality of sub-controllers, the first indication information indicates that a type of the second function is the hotspot function, and that the first sub-controller performs instance caching on the instance on the first computing node based on the first indication information includes: The first sub-controller transfers the instance of the second function from the second area to the first area.

Because a quantity of invocation requests for a function fluctuates with time, correspondingly, a type of the function also fluctuates with time. In embodiments of this application, a cache location of an instance of the function may be adjusted based on a change of the type of the function, that is, target cache duration of the function may be adjusted, to adapt to a change of a hotspot, thereby helping further improve cache resource utilization.

With reference to the first aspect, in some implementations of the first aspect, the method further includes: The primary controller determines a type of a function in the cluster based on a quantity of invocations of the function in the cluster in the cluster, where the function in the cluster includes the at least one function.

With reference to the first aspect, in some implementations of the first aspect, the method further includes: Upon arrival of an invocation request for a third function, the primary controller determines a third computing node from the cluster based on accumulated hotness of a plurality of computing nodes in the cluster, where the third computing node is configured to create an instance of the third function, and accumulated hotness of each of the plurality of computing nodes is determined based on a quantity of invocations of a function on each computing node in the cluster.

In the solution of embodiments of this application, instance scheduling may be implemented based on accumulated hotness of a computing node. This helps implement proper resource allocation, avoid a single-node performance bottleneck caused by hotness accumulation on the computing node, and reduce load imbalance, and helps avoid resource contention between hotspot functions, thereby reducing an occurrence rate of cold start invocation. The accumulated hotness of each computing node may be determined based on the quantity of invocations of the function on each computing node in the cluster. In this way, access behavior of the function can be analyzed from a global perspective, and then the accumulated hotness of each computing node is determined based on this. This helps obtain a more accurate and comprehensive accumulated hotness, and helps further tilt for a hotspot function, to avoid resource contention between hotspot functions.

With reference to the first aspect, in some implementations of the first aspect, the accumulated hotness of each of the plurality of computing nodes is determined based on hotness of a function of the hotspot function type on each computing node and a quantity of instances of the function of the hotspot function type on each computing node, and the hotness of the function of the hotspot function type on each computing node is determined based on a quantity of invocations of the function of the hotspot function type on each computing node in the cluster.

Further, the hotness of the function may be obtained by performing weighted summation on quantities of executions of the function in counting cycles.

With reference to the first aspect, in some implementations of the first aspect, a ratio of accumulated hotness of the third computing node to an available resource of the third computing node is less than or equal to a ratio of accumulated hotness of another computing node other than the third computing node in the plurality of computing nodes to an available resource of the another computing node.

In the solution of embodiments of this application, when the third computing node is determined, a quantity of available resources of the computing node is considered. This helps further avoid hotness accumulation on the computing node.

With reference to the first aspect, in some implementations of the first aspect, an instance in the cluster does not include an available instance of the third function.

In the solution of embodiments of this application, when an invocation request for a function arrives, only if there is no available instance of the function in the plurality of computing nodes in the cluster, cold start invocation is triggered, to perform instance scheduling to create a new instance. This helps reduce instance cache redundancy between computing nodes, and improve cache resource utilization.

With reference to the first aspect, in some implementations of the first aspect, the method further includes: Upon arrival of an invocation request for a third function, a load dispatcher forwards the invocation request for the third function to a fourth computing node in the cluster, where an instance on the fourth computing node includes an available instance of the third function.

With reference to the first aspect, in some implementations of the first aspect, the method further includes: The first computing node creates an instance of a fourth function, where the first indication information indicates that a type of the instance of the fourth function is the hotspot function. That the first sub-controller performs instance caching on the instance on the first computing node based on the first indication information includes: The first sub-controller caches the instance of the fourth function in the first area.

With reference to the first aspect, in some implementations of the first aspect, the method further includes: The first computing node creates an instance of a fifth function, where the first indication information indicates that a type of the instance of the fifth function is the non-hotspot function. That the first sub-controller performs instance caching on the instance on the first computing node based on the first indication information includes: The first sub-controller caches the instance of the fifth function in the second area.

Optionally, the method further includes: The first sub-controller adjusts a quantity of instances of a sixth function on the first computing node based on load of the sixth function, where a type of the sixth function is the hotspot function.

In the solution of embodiments of this application, a sub-controller may monitor a change of load of a hotspot function on a corresponding computing node, and if the load decreases, a quantity of instances of the hotspot function may be correspondingly reduced. This helps further reduce memory consumption of instance caching, and avoid unnecessary instance caching, thereby helping avoid cache redundancy.

According to a second aspect, a function cache system is provided. The system includes a primary controller and a plurality of sub-controllers. The primary controller is configured to send first indication information to a first sub-controller in the plurality of sub-controllers, where the first indication information is used to determine a cache policy for an instance on a first computing node in a cluster; the first sub-controller is configured to perform instance caching on the instance on the first computing node based on the first indication information; the primary controller is further configured to send second indication information to a second sub-controller in the plurality of sub-controllers, where the second indication information is used to determine a cache policy for an instance on a second computing node in the cluster; and the second sub-controller is configured to perform instance caching on the instance on the second computing node based on the second indication information.

With reference to the second aspect, in some implementations of the second aspect, the first sub-controller is deployed on the first computing node, the second sub-controller is deployed on the second computing node, and the primary controller is deployed on a control node.

With reference to the second aspect, in some implementations of the second aspect, a memory of the first computing node includes a first area and a second area.

An instance of a first function on the first computing node is cached in the first area before the primary controller sends the first indication information to the first sub-controller in the plurality of sub-controllers, and the first sub-controller is specifically configured to transfer the instance of the first function from the first area to the second area. Alternatively, an instance of a second function on the first computing node is cached in the second area before the primary controller sends the first indication information to the first sub-controller in the plurality of sub-controllers, and the first sub-controller is specifically configured to transfer the instance of the second function from the second area to the first area.

With reference to the second aspect, in some implementations of the second aspect, target cache duration of an instance cached in the first area is greater than target cache duration of an instance cached in the second area.

With reference to the second aspect, in some implementations of the second aspect, the cache policy for the instance on the first computing node includes target cache duration of an instance of at least one function on the first computing node, the first indication information indicates a type of the at least one function, the type of the at least one function includes a hotspot function or a non-hotspot function, and in the at least one function, target cache duration of an instance of a function of the hotspot function type is greater than target cache duration of an instance of a function of the non-hotspot function type.

With reference to the second aspect, in some implementations of the second aspect, a memory of the first computing node includes a first area and a second area, the first area is used to cache an instance of a function of the hotspot function type on the first computing node, and the second area is used to cache an instance of a function of the non-hotspot function type on the first computing node.

With reference to the second aspect, in some implementations of the second aspect, the at least one function includes a first function, an instance of the first function is cached in the first area before the primary controller sends the first indication information to the first sub-controller in the plurality of sub-controllers, the first indication information indicates that a type of the first function is the non-hotspot function, and the first sub-controller is specifically configured to transfer the instance of the first function from the first area to the second area. Alternatively, the at least one function includes a second function, an instance of the second function is cached in the second area before the primary controller sends the first indication information to the first sub-controller in the plurality of sub-controllers, the first indication information indicates that a type of the second function is the hotspot function, and the first sub-controller is specifically configured to transfer the instance of the second function from the second area to the first area.

With reference to the second aspect, in some implementations of the second aspect, the primary controller is further configured to determine a type of a function in the cluster based on a quantity of invocations of the function in the cluster in the cluster, where the function in the cluster includes the at least one function.

With reference to the second aspect, in some implementations of the second aspect, the primary controller is further configured to: upon arrival of an invocation request for a third function, determine a third computing node from the cluster based on accumulated hotness of a plurality of computing nodes in the cluster, where the third computing node is configured to create an instance of the third function, and accumulated hotness of each of the plurality of computing nodes is determined based on a quantity of invocations of a function on each computing node in the cluster.

With reference to the second aspect, in some implementations of the second aspect, the accumulated hotness of each of the plurality of computing nodes is determined based on hotness of a function of the hotspot function type on each computing node and a quantity of instances of the function of the hotspot function type on each computing node, and the hotness of the function of the hotspot function type on each computing node is determined based on a quantity of invocations of the function of the hotspot function type on each computing node in the cluster.

With reference to the second aspect, in some implementations of the second aspect, a ratio of accumulated hotness of the third computing node to an available resource of the third computing node is less than or equal to a ratio of accumulated hotness of another computing node other than the third computing node in the plurality of computing nodes to an available resource of the another computing node.

With reference to the second aspect, in some implementations of the second aspect, an instance in the cluster does not include an available instance of the third function.

With reference to the second aspect, in some implementations of the second aspect, the system further includes a load dispatcher, configured to: upon arrival of an invocation request for a third function, forward the invocation request for the third function to a fourth computing node in the cluster, where an instance on the fourth computing node includes an available instance of the third function.

It should be understood that extensions, definitions, explanations, and descriptions of related content in the first aspect are also applicable to same content in the second aspect.

According to a third aspect, a computing device cluster is provided. The computing device cluster includes at least one computing device, and each computing device includes a processor and a memory. A processor of the at least one computing device is configured to execute instructions stored in the memory of the at least one computing device, to cause the computing device cluster to perform the method in any one of the first aspect and the implementations of the first aspect.

According to a fourth aspect, a computer-readable medium is provided, including computer program instructions. When the computer program instructions are executed by a computing device cluster, the computing device cluster performs the method in any one of the first aspect and the implementations of the first aspect.

According to a fifth aspect, a computer program product including instructions is provided. When the instructions are run by a computing device cluster, the computing device cluster is caused to perform the method in any one of the first aspect and the implementations of the first aspect.

**BRIEF DESCRIPTION OF DRAWINGS**

FIG. 1 is a diagram of a distributed cache control architecture;
FIG. 2 is a schematic flowchart of a function cache method according to an embodiment of this application;
FIG. 3 is a diagram of quantities of invocations of a function in a plurality of counting cycles;
FIG. 4 is a diagram of a memory partitioning status according to an embodiment of this application;
FIG. 5 is a diagram of a transfer status of a cache area of an instance according to an embodiment of this application;
FIG. 6 is a block diagram of a cache control system according to an embodiment of this application;
FIG. 7 is a diagram of a cache control procedure according to an embodiment of this application;
FIG. 8 is a diagram of a centralized cache architecture according to an embodiment of this application;
FIG. 9 is a schematic flowchart of a function cache method according to an embodiment of this application;
FIG. 10 is a block diagram of a function cache system according to an embodiment of this application;
FIG. 11 is a block diagram of a computing device according to an embodiment of this application;
FIG. 12 is a block diagram of a computing device cluster according to an embodiment of this application; and
FIG. 13 is a diagram of a connection manner of a computing device cluster according to an embodiment of this application.

**DESCRIPTION OF EMBODIMENTS**

The following describes the technical solutions in embodiments of this application with reference to the accompanying drawings.

To better describe the solutions in embodiments of this application, the following first describes possible terms in embodiments of this application.

(1) Serverless computing (serverless computing)

Serverless computing may be represented as a function as a service (function as a service, FaaS), and is a cloud computing programming paradigm. Compared with a conventional cloud computing mode represented by a virtual machine, serverless computing features zero maintenance for users, event-driven, elastic scalability, and on-demand charging. In serverless computing, user applications are abstracted into a plurality of stateless functions, that is, fundamental computational units. The function may be triggered in an event-driven manner. Upon arrival of an invocation request, a serverless computing platform may provide services via a corresponding function instance (such as a lightweight virtual machine or container). When the instance is idle, the function instance may be released, to implement on-demand resource usage to reduce user costs.

By virtue of serverless computing, developers simply upload service code, while cloud providers automatically complete operations including function construction, deployment, runtime scale-in/out, and rolling upgrade. This greatly simplifies a development and deployment procedure of a cloud application and reduces cloud computing costs for users.

(2) Cold start

Cold start refers to a process in which a serverless computing platform creates an instance of a function.

Upon arrival of an invocation request, if there is no available instance of the function in the serverless computing platform, cold start invocation is triggered. To be specific, upon arrival of the invocation request, if there is no available instance of the function, the serverless computing platform creates a corresponding instance (such as a lightweight virtual machine or container) to provide services. For example, the instance may be created by performing a series of operations such as pulling images, importing user code and libraries, and initializing a runtime environment. Such a process is a cold start process.

Currently, a cold start process based on a lightweight container usually takes hundreds of milliseconds to hundreds of seconds, resulting in significant response latency for function services. The time consumed in the cold start process may also be referred to as initialization overheads.

(3) Instance caching

If there is no available function instance in a computing node of a serverless computing platform upon arrival of an invocation request for a function, cold start invocation is triggered. Cold start invocation causes significant response latency for function services, adversely affecting service experience of users. In serverless computing scenarios, most functions are interactive services, and workload features latency sensitivity, short lifecycle, and high dynamic. Related research shows that an end-to-end latency of the function caused by cold start may increase by more than 10 times. Especially during burst traffic surge, if a serverless platform performs cold start for instances of a large quantity of functions in a short period of time, imposing substantial pressure to platform scheduling and system performance.

Instance caching is a common method for reducing cold start invocation. This approach entails retaining a function instance post-execution of an invocation request rather than releasing it immediately; instead, keeping it active in the node's cache for a period of time allows subsequent requests arriving shortly thereafter to reuse the same instance, thus avoiding cold starts.

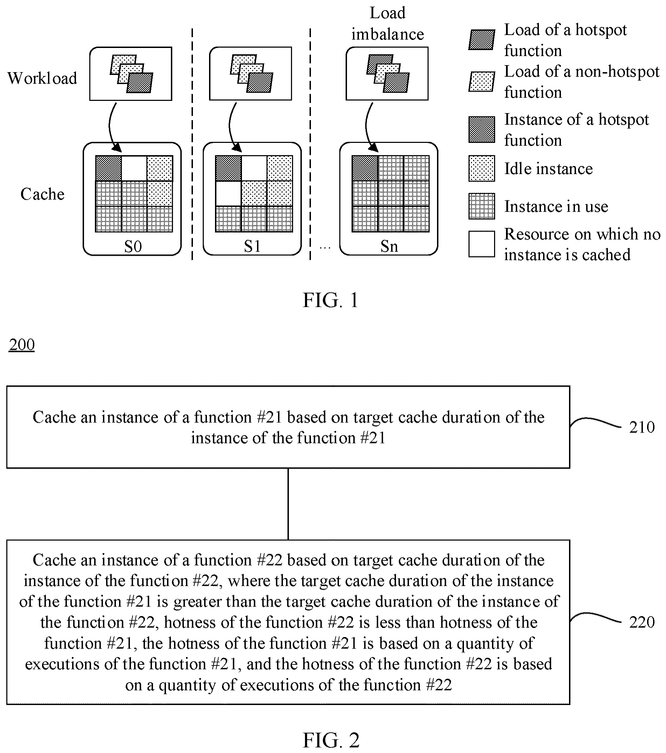

FIG. 1 is a diagram of a distributed cache control architecture. In the distributed cache control architecture, each computing node independently controls and manages instance caching.

As shown in FIG. 1, a cluster includes a plurality of computing nodes, that is, a computing node S1, a computing node S2, a computing node Sn, and the like. Instances of deployed functions are cached on each computing node. As shown in FIG. 1, the cached instances include an instance of a hotspot function and an instance of a non-hotspot function. Each computing node may be configured to process an invocation request for a function. If the invocation request for the function does not arrive in a period of time or at a moment, an instance that is of the function and that is cached on the computing node is in an idle state, that is, is an idle instance in FIG. 1. When the invocation request for the function arrives, a load dispatcher dispatches the invocation request to each computing node for execution, that is, dispatches workload to each computing node for execution. If the computing node that receives the invocation request has an available instance of the function, that is, there is an idle instance of the function on the computing node, the computing node may reuse the instance of the function to execute the invocation request. If there is no available instance of the function on the computing node, the computing node creates an instance of the function, for example, creates the instance by using a resource of an uncached instance, and after the instance is executed, caches the instance on the computing node.

The following describes a related solution of instance caching.

In the related solution, a static keep-alive (keep-alive) mechanism is used for instance caching. To be specific, after an instance of a function on a computing node executes an invocation request, if no subsequent request arrives, the instance of the function is automatically released after being cached for keep-alive duration. For example, the keep-alive duration may be 1 minute to 15 minutes. However, this manner cannot adapt to a change of dynamic load, and causes a waste of a large quantity of cache resources in a low-traffic period, resulting in high cache costs.

In the related solution, a reservation mechanism is used for instance caching. To be specific, in addition to a keep-alive mechanism inside a serverless computing platform, a user may set a quantity of reserved instances of a function in a customized manner, to better cope with a traffic peak. For example, a concurrency setting interface of the function is provided for the user. After the user sets the quantity of reserved instances, a quantity of function instances of the function inside the serverless computing platform is maintained close to the value. However, the quantity of instances of the function needs to be maintained at the value set by the user. When traffic is low, this solution causes a waste of a large quantity of cache resources, resulting in high cache costs.

In the related solution, a passive cache policy based on priority replacement is used for instance caching. To be specific, a priority of an instance of a function is determined by analyzing a load characteristic of the function and the like, and the instance of the function is cached in a priority eviction manner. When cache resources are sufficient, instances of all functions are cached in a memory for a long time and are not released. When cache resources are insufficient, an instance of a function with a lower priority is evicted to release resources to create a new instance. In this manner, instances are cached as many as possible in limited node resources to reduce cold start invocation. This consumes a large quantity of cache resources, and may lead to a problem of cache redundancy and cause unnecessary cache overheads.

In view of this, embodiments of this application provide a function cache method. A cache resource is configured based on hotness of a function, and a resource is preferentially allocated to cache a function with a higher hotness. This helps avoid a waste of cache resources while reducing the incidence of cold start invocation, thereby helping improve cache resource utilization.

FIG. 2 shows a function cache method according to an embodiment of this application. Instance caching is performed on an instance based on target cache duration of the instance.

Optionally, performing instance caching on the instance based on the target cache duration of the instance may include: if the instance is not cached in a computing node, caching the instance based on the target cache duration of the instance. For specific descriptions, refer to step 210 and step 220.

Optionally, performing instance caching on the instance based on the target cache duration of the instance may include: if the instance is cached in a computing node, adjusting a cache status of the instance based on adjustment on the target cache duration of the instance. For specific descriptions, refer to step 230.

As shown in FIG. 2, the method 200 includes step 210 and step 220. The following describes the method 200.

210: Cache an instance of a function #21 based on target cache duration of the instance of the function #21.

220: Cache an instance of a function #22 based on target cache duration of the instance of the function #22, where the target cache duration of the instance of the function #21 is greater than the target cache duration of the instance of the function #22, hotness of the function #22 is less than hotness of the function #21, the hotness of the function #21 is based on a quantity of executions of the function #21, and the hotness of the function #22 is based on a quantity of executions of the function #22.

After an instance of a function is executed, the instance is cached based on target cache duration of the instance of the function. If no invocation request for the function arrives within the target cache duration, the instance is released after the target cache duration expires. The target cache duration of the instance of the function #22 may be 0. In this case, after the instance of the function #22 is executed, the instance may be directly released, that is, the instance is not cached.

For example, there is a positive correlation between hotness of a function and a quantity of executions of the function. In other words, a larger quantity of executions of a function indicates a higher hotness of the function.

In the solution of embodiments of this application, a cache resource is configured based on hotness of a function, and target cache duration of an instance of a function with a higher hotness is greater than target cache duration of an instance of a function with a lower hotness, that is, a resource is preferentially allocated to cache the instance of the function with the higher hotness. This helps avoid a waste of cache resources while reducing the incidence of cold start invocation, that is, helps improve cache resource utilization. Specifically, the function with the higher hotness is more likely to be frequently invoked, and the resource is preferentially allocated to the instance of the function with the higher hotness. This helps improve a hit rate of caching the instance, thereby reducing an occurrence frequency of cold start to reduce response latency, and avoiding allocating a large quantity of cache resources to the instance of the function with the lower hotness. The instance may be released after the target cache duration expires. This helps avoid a waste of cache resources.

The hotness of the function may be determined in a plurality of manners. The following describes a function determining manner by using an example.

The quantity of executions of the function may also be referred to as a quantity of invocations of the function or a quantity of times the function is accessed.

For example, a corresponding invocation counter may be set for each function. The invocation counter corresponding to the function is configured to count a quantity of executions of the function.

A service scenario of serverless computing includes a large quantity of interactive application services, such as a network (web) service and artificial intelligence (artificial intelligence, AI) inference. A working characteristic of a function is affected by user behavior, and may face an unpredictable request load fluctuation (for example, a burst request).

Optionally, the hotness of the function may be obtained by performing weighted summation on quantities of executions of the function in counting cycles. A weight corresponding to each counting cycle is in a negative correlation with a distance between each counting cycle and a current moment. In other words, a short distance between the counting cycle and the current moment indicates a larger weight corresponding to the counting cycle.

A sum of products of the quantities of executions of the function in the counting cycles and weights corresponding to the computing cycles may be used as the hotness of the function.

For example, the current moment may be understood as a moment at which the hotness of the function is computed, or a moment at which the quantities of executions in the counting cycles are read.

For example, the invocation counter corresponding to each function may re-count at intervals of a specific period, and the period is a counting cycle. For example, the counting cycle may be 1 hour, 24 hours, 48 hours, or the like. A quantity of counting cycles may be set as required.

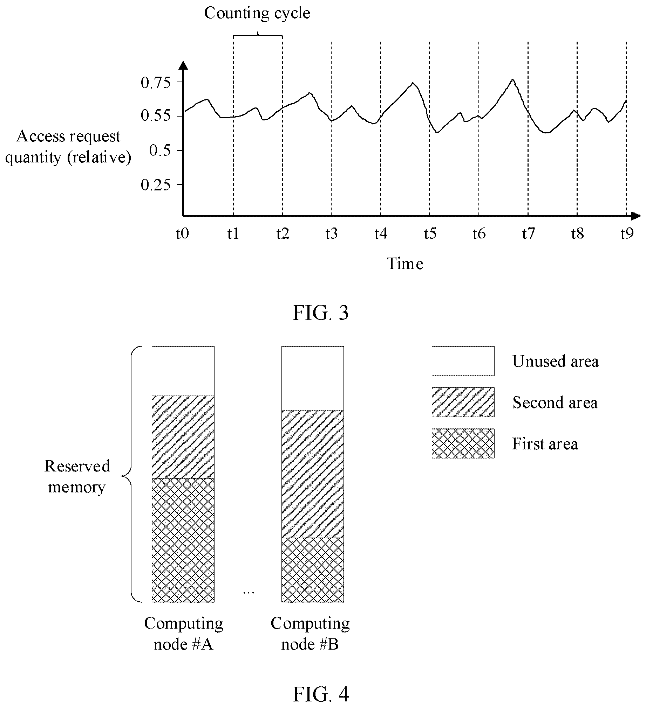

FIG. 3 is a diagram of quantities of invocations of a function in a plurality of counting cycles. FIG. 3 shows nine counting cycles each with 48 hours. A vertical coordinate indicates an access request quantity, which is a relative value, that is, a quantity of access times at each moment is normalized by using a largest value in quantities of access times at all moments.

For example, for a function, weighted summation may be performed on quantities of executions of the function in the counting cycles by using a binary decay algorithm, to obtain hotness of the function. The hotness of the function may satisfy the following formula:

$$H_i = \sum_{t=1}^{T} 2^{1-t} counter_i[t].$$

$H_i$ indicates hotness of an $i^{th}$ function, T indicates a quantity of counting cycles, and t indicates a $t^{th}$ counting cycle. $counter_i[t]$ indicates a quantity of executions of the $i^{th}$ function in the $t^{th}$ counting cycle. i=1, 2, ..., m. m is a quantity of all functions. m is a positive integer. T is a positive integer. $counter_i[t]$ is an integer greater than or equal to 0.

In the solution of embodiments of this application, the hotness of the function is determined by performing weighted summation on the quantities of executions of the function in the counting cycles. This helps reduce impact of a load fluctuation on accuracy of determining the hotness of the function. In addition, an invocation status of the function closer to the current moment can better reflect a current load status of the function. In embodiments of this application, a shorter distance between a counting cycle and the current moment indicates a larger weight corresponding to the counting cycle, that is, a closer counting cycle has greater impact on hotness determining. The hotness of the function determined in this manner can better reflect the current invocation status of the function. This helps improve accuracy of determining the hotness of the function.

It should be understood that the foregoing is merely an example, and does not constitute a limitation on the solution of embodiments of this application. The hotness of the function may alternatively be determined in another manner.

For example, the target cache duration of the instance of the function is in a positive correlation with the hotness of the function.

In other words, a higher hotness of the function indicates longer target cache duration of the instance of the function.

Optionally, a type of the function #21 is a hotspot function, and a type of the function #22 is a non-hotspot function. The target cache duration of the instance of the function #21 is target cache duration corresponding to the hotspot function, and the target cache duration of the instance of the function #22 is target cache duration corresponding to the non-hotspot function.

In other words, functions are classified into two types: the hotspot function and the non-hotspot function. If a function (for example, the function #21) is the hotspot function, an instance of the function is cached based on the target cache duration corresponding to the hotspot function. If a function (for example, the function #22) is the non-hotspot function, an instance of the function is cached based on the target cache duration corresponding to the non-hotspot function.

In the solution of embodiments of this application, the hotspot function and the non-hotspot function are distinguished. Target cache duration of the hotspot function is greater than target cache duration of the non-hotspot function, that is, a resource is preferentially allocated to cache the hotspot function. This helps avoid a waste of cache resources while reducing the incidence of cold start invocation, that is, helps improve cache resource utilization. Specifically, because the hotspot function is invoked more frequently, a resource is preferentially allocated to cache the hotspot function. This helps improve a hit rate of caching the instance, thereby reducing an occurrence frequency of cold start to reduce response latency, and avoiding allocating a large quantity of cache resources to the non-hotspot function. This helps avoid a waste of cache resources. In addition, functions are classified into the hotspot function and the non-hotspot function, and target cache duration of an instance of a function can be determined based on a type of the function, so that implementation is more convenient and efficient.

The hotspot function is determined based on hotness of m functions.

A set of the m functions may be represented as $\{H_j | j = 1, 2, ..., m\}$ in descending order of the hotness of the functions. $H_j$ represents hotness of a $j^{th}$ function. $H_j \geq H_{j+1}$, and j=1, 2, ..., m.

For example, the hotspot function may be functions with top N pieces of hotness in the m functions.

A remaining function in the m functions other than the N hotspot functions may be a non-hotspot function.

A set of the top N functions is a set of hotspot functions.

A value of N may be a fixed value. Alternatively, N may be a variable value.

For example, a ratio of a sum of the hotness of the top N functions to a sum of the hotness of the m functions is greater than or equal to a threshold #1, and a ratio of a sum of hotness of top N-1 functions to the sum of the hotness of the m functions is less than the threshold #1. In other words, N is a value that minimizes the quantity of hotspot functions when a ratio of a sum of hotness of all the hotspot functions to the sum of the hotness of the m functions is greater than or equal to the threshold #1.

The sum of the hotness of the m functions may also be referred to as a total hotness.

The threshold #1 may be set as required. For example, the threshold #1 may be 90%, that is, the sum of the hotness of the top N functions is greater than or equal to 90% of the total hotness.

For example, the hotspot function may satisfy the following formula:

$$\sum_{j=1}^{N} H_j \geq r \sum_{j=1}^{m} H_j .$$

r indicates the threshold #1. 0<r<1.

For example, the hotspot function may be a function whose hotness is greater than or equal to a threshold #2.

The threshold #2 may be set as required.

It should be understood that the foregoing manner of determining the hotspot function is merely an example, and constitutes no limitation on the solution of embodiments of this application.

For example, a memory of the computing node may include a first area and a second area. The first area and the second area may be used to cache instances. Target cache duration of an instance in the first area is greater than target cache duration of an instance in the second area.

Optionally, the first area may be used to cache the hotspot function, and the second area may be used to cache the non-hotspot function.

For example, the computing node creates the instance of the function #21. After the instance is executed, a type of the function #21 is the hotspot function, and the instance is cached in the first area of the computing node. The computing node creates the instance of the function #22. A type of the function #22 is the hotspot function. After the instance is executed, the instance is cached in the second area of the computing node.

Optionally, the target cache duration corresponding to the non-hotspot function is greater than 0.

In the solution of embodiments of this application, a cache resource may be allocated to the non-hotspot function for caching. This helps reduce a decision error caused by insufficient hotness recognition precision or latency, and helps reduce an occurrence frequency of cold start, to reduce response latency.

For example, the target cache duration corresponding to the hotspot function may not be limited. For example, the target cache duration corresponding to the hotspot function may be a large value. In other words, the instance of the hotspot function is not limited by lifecycle duration, and may be stored for a long time.

In embodiments of this application, the instance of the hotspot function may be stored for a long time. This helps further reduce an occurrence frequency of cold start, so as to reduce response latency.

The target cache duration corresponding to the non-hotspot function is a finite value. Caching of the instance of the non-hotspot function is limited by the lifecycle duration. Specifically, when time for which the instance of the non-hotspot function on the computing node is in an idle state exceeds a period of time, that is, target cache duration of the instance of the non-hotspot function exceeds a period of time, the instance is released. Alternatively, the target cache duration corresponding to the non-hotspot function may be 0, that is, the instance of the non-hotspot function is not cached.

In embodiments of this application, the target cache duration corresponding to the non-hotspot function is a finite value. If no invocation request arrives within the target cache duration, the instance of the non-hotspot function is released, and a cache resource is not occupied for a long time. This helps avoid a waste of cache resources.

Further, the instance of the hotspot function that is cached on the computing node is not evicted by a creation event of another instance on the computing node.

The instance of the non-hotspot function that is cached on the computing node may be evicted by a creation event of another instance on the computing node. For example, when an available resource on the computing node is insufficient to create a new instance, the instance of the non-hotspot function that is cached on the computing node may still be forcibly evicted even when the target cache duration corresponding to the non-hotspot function does not expire, to release a resource.

The first area and the second area are used as an example. For example, an instance cached in the first area is not limited by the lifecycle duration, and is not evicted by a creation event of another instance on the computing node. The first area may also be referred to as a persistent memory area. An instance cached in the second area is limited by the lifecycle duration. After target cache duration of the instance cached in the second area exceeds a period of time, the instance is released. In addition, when an available resource in the computing node is insufficient to create a new instance, some or all instances cached in the second area are forcibly evicted to release a resource. The second area may also be referred to as a temporary memory area.

For the non-hotspot function, the instance of the non-hotspot function may be cached in a best-effort manner. The target cache duration corresponding to the non-hotspot function is shorter than the target cache duration corresponding to the hotspot function, and the non-hotspot function may be evicted by a creation event of another instance on the computing node.

FIG. 4 is a diagram of a memory partitioning status according to an embodiment of this application.

A reserved memory area in a computing node may include a first area, a second area, and an unused area. As shown in FIG. 4, partitioning manners of reserved memory areas in different computing nodes may be the same, or may be different. It should be understood that, in FIG. 4, only two computing nodes (that is, a computing node #A and a computing node #B) are used as an example for description, and a quantity of computing nodes in embodiments of this application is not limited.

In the solution of embodiments of this application, the instance of the hotspot function is not evicted by a creation event of another instance, so as to avoid eviction of the instance of the hotspot function caused by resource contention. This helps ensure a cache status of the instance of the hotspot function, and helps further reduce an occurrence frequency of cold start.

Optionally, the method 200 may include step 230 (not shown in the figure).

230: Adjust a cache status of an instance of a function #23 based on target cache duration of the instance of the function #23.

Optionally, when a type of the function #23 is adjusted from the hotspot function to the non-hotspot function, cache duration of the cached instance of the function #23 is adjusted based on the target cache duration corresponding to the non-hotspot function, or when a type of the function #23 is adjusted from the non-hotspot function to the hotspot function, cache duration of the cached function #23 is adjusted based on the target cache duration corresponding to the hotspot function.

For a cached instance of a function on the computing node, when a type of the function changes, cache duration of the cached instance of the function may be adjusted based on target cache duration corresponding to a changed type.

It should be noted that step 210 and step 220, and step 230 are relatively optional steps. That is, in the method 200, only step 210 and step 220 may be performed. Alternatively, in the method 200, only step 230 may be performed. Alternatively, in the method 200, step 210 and step 220, and step 230 may all be performed.

The first area and the second area are used as an example. For example, when the instance of the function #23 is executed, the function #23 is a hotspot function, and the instance is cached in the first area. After a period of time, if the type of the function #23 is adjusted from the hotspot function to the non-hotspot function, the instance of the function #23 in the first area is transferred to the second area. For another example, when the instance of the function #23 is executed, the function #23 is a non-hotspot function, and the instance is cached in the second area. After a period of time, if the type of the function #23 is adjusted from the non-hotspot function to the hotspot function, the instance of the function #23 in the second area is transferred to the first area.

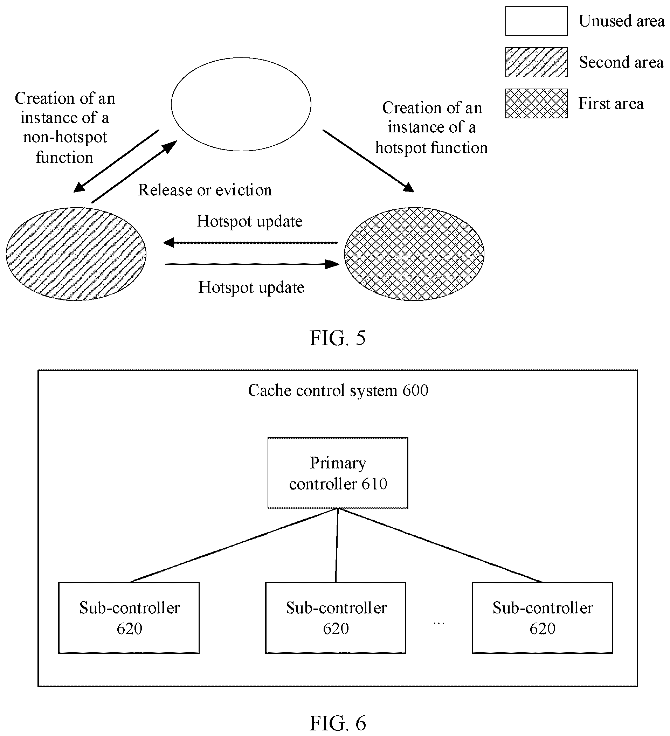

FIG. 5 is a diagram of a transfer status of a cache area of an instance according to an embodiment of this application. For example, as shown in FIG. 5, a computing node may create an instance of a function by using a resource in an unused area. If the function is a hotspot function, after the instance of the function is executed, the instance of the hotspot function is cached in a first area. If the function is a non-hotspot function, after the instance of the function is executed, the instance of the non-hotspot function is cached in a second area. After cache duration of the instance cached in the second area reaches the target cache duration corresponding to the non-hotspot function, the instance may be released. If the resource in the unused area is insufficient to create a new instance, an instance cached in the second area is evicted to release a resource. When a type of the function changes, that is, when a hotspot is updated, transfer may be performed between the first area and the second area based on a type of the instance.

For example, after a cache location of the instance changes, timing may be re-performed for duration for which the instance has been cached. For example, after the instance is transferred from the first area to the second area, current duration for which the instance has been cached may be considered as 0. If no invocation request arrives within the target cache duration corresponding to the non-hotspot function, the instance is released.

For example, after the cache location of the instance changes, timing may be continued based on the duration for which the instance has been cached. For example, after the instance is transferred from the first area to the second area, the current duration for which the instance has been cached is 20 minutes. If the duration is greater than or equal to the target cache duration corresponding to the non-hotspot function, the instance is released. If the instance is less than the target cache duration corresponding to the non-hotspot function, the instance continues to be cached until the target cache duration corresponding to the non-hotspot function expires. If no invocation request arrives in this period of time, the instance is released.

A quantity of invocation requests for a function fluctuates with time. In embodiments of this application, cache duration of the function may be adjusted based on a change of a type of the function, to adapt to a change of a hotspot, thereby helping further improve cache resource utilization.

The computing node may further monitor a load change of the hotspot function in the computing node, and adjust a quantity of cached instances of the hotspot function based on the load change.

Optionally, the method 200 may further include: adjusting a quantity of cached instances of the function #21 based on load of the function #21.

Specifically, when the load of the function #21 decreases, the quantity of cached instances of the function #21 may be reduced.

For example, load of the hotspot function may be indicated by a request arrival rate of the hotspot function. For example, if an average concurrent arrival rate of the function #21 in a period of time is 10, and the quantity of instances of the function #21 that are cached on the computing node is 20, a cache scale-in operation is triggered, and the computing node may reclaim 10 redundant cached instances. The concurrent arrival rate means a quantity of requests for the instance of the function that arrive in unit time. The unit time is usually 1 second. The concurrent arrival rate is a quantity of requests for the instance of the function that arrive per second.

This helps further reduce memory consumption of instance caching, and avoid unnecessary instance caching, thereby helping avoid cache redundancy.

In a possible implementation, the method 200 may be applied to a distributed cache architecture. For example, in the distributed cache architecture shown in FIG. 1, the method 200 may be performed by any computing node.

The computing node may cache an instance on the computing node based on target cache duration of a function.

For example, hotness of the function is based on a quantity of executions of the function on the computing node. In this case, the hotness of the function may also be referred to as hotness of the function on the computing node.

For example, as described above, a corresponding invocation counter may be set for each function on the computing node. The invocation counter corresponding to the function is configured to count a quantity of executions of the function on the computing node.

For example, as described above, the hotness of the function may be obtained by performing weighted summation on quantities of executions of the function in counting cycles. A quantity of executions of the function in each counting cycle is a quantity of executions of the function on the computing node in each counting cycle.

As described above, the hotspot function is determined based on the hotness of the m functions. The m functions may be all functions on the computing node, that is, all functions processed by the computing node. The N hotspot functions are hotspot functions on the computing node.

Efficiency of cache resources in the distributed cache control architecture shown in FIG. 1 is low. If a load amount of functions on a same server is large, for example, requests for one or more hotspot functions are forwarded to a same server, the server may bear higher load pressure than another server, that is, hotspot function imbalance or load imbalance occurs. As shown in FIG. 1, requests for a plurality of hotspot functions are forwarded to Sn, and load imbalance occurs. In the distributed cache architecture, hotspot function imbalance easily causes hotspot contention inside the server, affecting function processing efficiency. A passive cache policy is used as an example. The solution reduces cold start invocation by caching as many instances as possible within limited node resources. When hotspot function imbalance occurs, cache resources are insufficient, and functions on the server contend for resources. Cached instances need to be frequently evicted to release resources to create a new instance. As a result, the incidence of cold start is high. In addition, in the distributed cache architecture, each computing node independently manages an instance, and a large quantity of instances of a same function may be cached on a plurality of nodes. As a result, a problem of cache redundancy of instances occurs between nodes, and cache resources are wasted.

In view of this, embodiments of this application provide a cache control system. The cache control system is a centralized cache control architecture, and implements cluster-level instance caching management and/or instance scheduling. The cache control system may be applied to a serverless scenario.

In a possible implementation, the method 200 may be applied to a centralized cache control architecture, for example, a cache control system shown in FIG. 6. For specific descriptions, refer to the following descriptions. Details are not described herein.

FIG. 6 is a diagram of a cache control system according to an embodiment of this application. As shown in FIG. 6, the cache control system 600 includes a primary controller 610 and a plurality of sub-controllers (cachelet) 620. The cache control system 600 uses a two-layer architecture. Specifically, the two-layer architecture includes a top-layer controller and bottom-layer sub-controllers.

The primary controller 610 is the top-layer controller. The sub-controller 620 is the bottom-layer sub-controller. The primary controller 610 is configured to be responsible for scheduling decision and/or management decision for a cache. For example, the primary controller 610 may implement sending of a control instruction, data collection, and the like by establishing a communication connection to each sub-controller 620. A sub-controller corresponding to each computing node may report related information of each computing node to the primary controller 610. For example, the related information of each computing node may include at least one of cache information of an instance on each computing node, a resource of each computing node, or the like. For example, the cache information of the instance on the computing node may include at least one of the following: a quantity of instances on the computing node, a status of the instance cached on the computing node, or the like.

In embodiments of this application, the primary controller 610 may also be referred to as a cache controller (cache manager), a centralized cache controller, a cache manager, a function scheduler, or a global cache manager (global cache manager). The system may include one primary controller 610, or may include a plurality of primary controllers 610. For clear description, FIG. 6 shows only one primary controller 610, which does not constitute a limitation on a quantity of primary controllers 610 in embodiments of this application. A cluster may include one or more control nodes, and the control node may be configured to implement a control function. For example, the primary controller 610 may be deployed on a control node in the cluster. Alternatively, the primary controller 610 may be deployed on a plurality of control nodes in a form of a copy in a distributed manner. This helps improve system reliability and helps ensure load balancing, thereby avoiding a performance bottleneck.

In embodiments of this application, the cluster includes a plurality of computing nodes (node), and the plurality of computing nodes may be configured to execute a function invocation request. Each of the plurality of computing nodes corresponds to one sub-controller 620. For example, as shown in FIG. 6, the sub-controller 620 may be deployed inside the computing node. For example, the sub-controller 620 may be deployed in each computing node in a manner of a daemon process. This can ensure system scalability. The sub-controller 620 may be configured to manage a cache resource in the corresponding computing node.

The sub-controller 620 may include a lifecycle manager (lifecycle manager). The lifecycle manager is configured to implement lifecycle management of an instance cached on the computing node. Specifically, an instance of a function is kept active for a period of time, that is, target cache duration. If no invocation request for the function arrives within the period of time, the instance is released. If an invocation request for the function arrives within the period of time, the invocation request is executed, and remaining keep-alive time of the function is refreshed after execution is completed, that is, the remaining keep-alive time of the instance of the function is refreshed to the target cache duration.

The node may be a server. The server may be a physical server or a virtual server. The control node may be a control server. The computing node may be a computing server. For clear description, FIG. 6 shows only sub-controllers 620 in three computing nodes, which do not constitute a limitation on a quantity of computing nodes and a quantity of sub-controllers 620 in embodiments of this application.

The control node and the computing node may be different nodes. In this way, in control and running logic, a control plane and a data plane can be separated, thereby improving system flexibility and reliability.

For example, the system 600 may be used as a submodule of a function computing framework inside a serverless computing cluster.

As described above, the cache control system 600 may be configured to implement cluster-level instance scheduling. The following describes instance scheduling.

The primary controller 610 may be configured to determine a scheduling node in the cluster. The scheduling node is configured to create an instance of a function.

When an invocation request for the function arrives, if cold start invocation is triggered, the primary controller 610 determines the scheduling node.

A trigger mechanism of cold start invocation may be implemented in a plurality of manners. The following describes an example of the trigger mechanism of cold start invocation.

A client may send an invocation request for a deployed function. A gateway (gateway) is configured to expose a function service interface to a user and receive the invocation (invocation) request for the function (function) that is sent by the client. The gateway may belong to the cache control system 600, or may not belong to the cache control system 600.

In a possible implementation, when the invocation request for the function arrives, a load dispatcher in the gateway forwards the invocation request to a computing node, and if there is no available instance of the function in the computing node, cold start invocation is triggered. If there is an available instance of the function in the computing node, the computing node may process the invocation request.

In another possible implementation, when the invocation request for the function arrives, if there is no available instance of the function in the cluster, cold start invocation is triggered. If there is an available instance of the function in the cluster, a computing node in computing nodes with available instances may process the invocation request.

Optionally, when an invocation request for a function #3 arrives, the primary controller 610 determines a computing node #3 from the cluster. The computing node #3 is configured to create an instance of the function #3, and an instance in the cluster does not include an available instance of the function #3. In this case, the computing node #3 is a scheduling node.

Optionally, when the invocation request for the function #3 arrives, the load dispatcher may forward the invocation request for the function #3 to a computing node #4, and an instance on the computing node #4 includes an available instance of the function #3.

For example, when the invocation request for the function arrives, the gateway may determine, based on a status of an instance cached in each computing node, whether there is an available instance of the function in each computing node, and if there is no available instance, trigger cold start invocation.

The status of the instance may include an idle state, a used state, and the like. That there is the available instance of the function in the computing node may be understood as that the computing node has cached the instance of the function when the invocation request for the function arrives, and the instance of the function is in an idle state.

For example, the status of the instance cached in each computing node may be maintained by the gateway. Alternatively, the gateway stores and updates the status of the instance cached in each computing node. That is, the gateway may be configured to collect statistics on the status of the instance cached in each computing node.

Alternatively, the status of the instance cached in each computing node may be obtained by the gateway from another module. For example, the status of the instance cached in each computing node may be maintained by the primary controller 610. In other words, the primary controller 610 stores and updates the status of the instance cached in each computing node. That is, the primary controller 610 may be configured to collect statistics on the status of the instance cached in each computing node. The sub-controller 620 may report a status of an instance cached in a corresponding computing node to the primary controller 610. For example, the sub-controller 620 may periodically report the status of the instance cached in the computing node to the primary controller 610. For another example, the sub-controller 620 may alternatively report, in response to a status request of the primary controller 610, the status of the instance cached in the computing node to the primary controller 610.

For example, when the invocation request for the function arrives, the primary controller 610 determines, based on a status of an instance cached in each computing node, whether there is an available instance of the function in each computing node, and if there is no available instance, triggers cold start invocation.

In this case, the status of the instance cached in each computing node may be maintained by the primary controller 610.

In the solution of embodiments of this application, when an invocation request for a function arrives, only if there is no available instance of the function in the plurality of computing nodes in the cluster, cold start invocation is triggered, to perform instance scheduling to create a new instance. This helps reduce instance cache redundancy between computing nodes, and improve cache resource utilization.

The following describes a scheduling node determining manner by using an example.

In an example, the primary controller 610 may determine the scheduling node based on resources of the plurality of computing nodes in the cluster.

For example, the primary controller 610 uses a computing node with lowest resource utilization in the plurality of computing nodes as the scheduling node. The resource utilization means a ratio of a sum of resources occupied by instances on the computing node to a total quantity of resources on the computing node. For example, a resource capacity of the computing node may be a total quantity of CPU resources or memory resources.

For another example, the primary controller 610 uses a computing node with a largest resource quantity of idle cache resources in the plurality of computing nodes as the scheduling node.

In an example, the primary controller 610 may determine the scheduling node based on load of the plurality of computing nodes in the cluster.

For example, the primary controller 610 may use a computing node with lowest load in the plurality of computing nodes as the scheduling node.

In an example, the primary controller 610 may determine the scheduling node based on quantities of instances cached in the plurality of computing nodes in the cluster.

For example, the primary controller 610 may use a computing node with a smallest quantity of cached instances in the plurality of computing nodes as the scheduling node.

In an example, the primary controller 610 may determine the scheduling node based on hotness of functions in the plurality of computing nodes in the cluster.

Optionally, when an invocation request for a function #3 arrives, the primary controller 610 may determine a computing node #3 from the cluster based on the hotness of the functions on the plurality of computing nodes in the cluster. The computing node #3 is configured to create an instance of the function #3. The hotness of the functions on the plurality of computing nodes is determined based on quantities of times that the functions on the plurality of computing nodes are invoked in the cluster.

In this case, the computing node #3 is a scheduling node.

Optionally, that the primary controller 610 determines the computing node #3 from the cluster based on the hotness of the functions on the plurality of computing nodes in the cluster may include: The primary controller 610 determines the computing node #3 from the cluster based on accumulated hotness of the plurality of computing nodes in the cluster, where the accumulated hotness of the plurality of computing nodes are respectively determined based on the hotness of the functions on the plurality of computing nodes and quantities of instances of the functions on the plurality of computing nodes.

In embodiments of this application, the accumulated hotness of the computing node may also be referred to as hotness accumulation index of the computing node. The following uses one computing node as an example to describe the accumulated hotness.

In an example, the accumulated hotness of the computing node may be determined based on hotness of all functions on the computing node and quantities of instances of all the functions.

The accumulated hotness of the computing node may be a sum of products of the hotness of all the functions cached on the computing node and the quantities of the instances of the functions. That is, a product of hotness of each function cached on the computing node and a quantity of instances of the function on the computing node is computed, and products corresponding to all the functions cached on the computing node are summed up, to obtain the accumulated hotness of the computing node.

In an example, the accumulated hotness of the computing node may be determined based on hotness of all hotspot functions on the computing node and quantities of instances of all the hotspot functions.

The accumulated hotness of the computing node may be a sum of products of the hotness of all the hotspot functions cached on the computing node and the quantities of the instances of the hotspot functions. That is, a product of hotness of each hotspot function cached on the computing node and a quantity of instances of the hotspot function on the computing node is computed, and products corresponding to all the hotspot functions cached on the computing node are summed up, to obtain the accumulated hotness of the computing node.

For example, the primary controller 610 may determine the accumulated hotness of each computing node based on a global hotspot view. The global hotspot view may indicate a hotspot function in the cluster. For example, the global hotspot view may be represented as a list of global hotspot functions or the like. Further, the global hotspot view may further indicate hotness of the hotspot function in the cluster, a distribution location of the hotspot function, and/or the like. The primary controller 610 may be configured to maintain the global hotspot view. Alternatively, the global hotspot view may be obtained by the primary controller from another module. For example, the global hotspot view may be maintained by the gateway, and the primary controller may obtain the global hotspot view from the gateway.

For example, accumulated hotness of the computing node #3 is less than or equal to accumulated hotness of another computing node different from the computing node #3 in the cluster.

That is, the primary controller may use a computing node with a lowest accumulated hotness in the plurality of computing nodes as the scheduling node.

Optionally, a ratio of the accumulated hotness of the computing node #3 to an available resource of the computing node #3 is less than or equal to a ratio of accumulated hotness of another computing node different from the computing node #3 in the cluster to an available resource of the another computing node.

That is, the primary controller 610 may use a computing node with a smallest ratio of accumulated hotness to a resource quantity of idle cache resources in the plurality of computing nodes as the scheduling node. The available resource in the computing node means a resource quantity of idle cache resources, that is, a quantity of remaining available cache resources.

For example, the available resource of each computing node may be reported by the sub-controller 620 corresponding to each computing node to the primary controller 610.

For ease of description, such a scheduling policy is referred to as a minimum hotness accumulation principle. That is, the primary controller 610 performs instance scheduling based on the minimum hotness accumulation principle.

For example, that the primary controller 610 may determine the computing node #3 from the cluster based on the hotness of the functions on the plurality of computing nodes in the cluster may include: The primary controller 610 may determine the scheduling node based on quantities of hotspot functions in the plurality of computing nodes in the cluster.

For example, the primary controller 610 may use a computing node with a smallest quantity of hotspot functions in the plurality of computing nodes as the scheduling node.

It should be understood that the foregoing is merely an example, and does not constitute a limitation on the solution of embodiments of this application. The primary controller 610 may alternatively determine the scheduling node based on another scheduling policy related to the hotness of the function.

In the solution of embodiments of this application, instance scheduling may be implemented based on accumulated hotness of a computing node. This helps implement proper resource allocation, avoid a single-node performance bottleneck caused by hotness accumulation on the computing node, and reduce load imbalance, and helps avoid resource contention between hotspot functions, thereby reducing the incidence of cold start invocation. For example, instance scheduling is implemented based on the minimum hotness accumulation principle, and a quantity of available resources of the computing node is considered. This helps further avoid hotness accumulation on the computing node.

The hotness of the function may be determined in a plurality of manners. The following uses the manner in the method 200 as an example for description.

For example, the hotness of the function may be determined based on a quantity of invocations of the function in the cluster. In this case, the hotness of the function may also be referred to as a global hotness of the function.

In the solution of embodiments of this application, the accumulated hotness of each computing node may be determined based on a global hotness of a function on the computing node. In this way, access behavior for the function can be analyzed from a global perspective, and the global hotness of the function is determined, so that the accumulated hotness of each computing node is determined based on this. This helps obtain a more accurate and comprehensive accumulated hotness. In a case that instance scheduling is implemented based on the minimum hotness accumulation principle, a global resource status is considered. This helps further avoid a single-node performance bottleneck caused by hotness accumulation on the computing node, and further reduce hotspot function imbalance, thereby avoiding resource contention between hotspot functions.

For example, as described above, the hotness of the function may be obtained by performing weighted summation on quantities of executions of the function in counting cycles. A quantity of executions of the function in each counting cycle is a quantity of executions of the function on all the computing nodes in the cluster in each counting cycle. For example, a cluster-level function invocation counter is set for each function to count a quantity of executions of the function on all the computing nodes in a counting cycle. For another example, a corresponding function invocation counter is set for each function on each computing node, and a quantity of executions of each function on the computing node in a counting cycle is counted, so that a quantity of executions of the function on all the computing nodes in the counting cycle is determined based on quantities of executions counted by function invocation counters corresponding to the function on all the computing nodes.

As described above, the hotspot function is determined based on the hotness of the m functions. The m functions may be all functions in the cluster, that is, all functions processed by all the computing nodes in the cluster, or all functions deployed by a user. The N hotspot functions are global hotspot functions. That is, global hotspot functions are detected at a cluster level, or hotspot functions are detected in a global view.

The accumulated hotness of the computing node may be computed by the primary controller 610. Alternatively, the accumulated hotness of the computing node may be obtained by the primary controller 610 from another module. For example, the primary controller 610 and the gateway may be two independently deployed modules, and the accumulated hotness of the computing node may be obtained by the primary controller 610 from the gateway.

For example, the primary controller 610 computes the accumulated hotness of each computing node based on the hotness of the function on each computing node. The hotness of the function may be computed by the primary controller 610. Alternatively, the hotness of the function may be obtained by the primary controller 610 from another module. For example, the primary controller 610 and the gateway may be two independently deployed modules, and the hotness of the function may be obtained by the primary controller 610 from the gateway.

As described above, the cache control system 600 may be configured to implement cluster-level instance caching management. The following describes instance caching management.

The primary controller 610 may be configured to manage a cache policy for an instance on each computing node.

Specifically, the primary controller 610 may be configured to determine the cache policy for the instance on each computing node. The sub-controller 620 may obtain indication information from the primary controller 610, where the indication information indicates a cache policy for an instance on a computing node corresponding to the sub-controller 620. The sub-controller 620 corresponding to each computing node may perform instance caching on the instance on the computing node based on the indication information.

The indication information may be a control instruction.

Optionally, the primary controller 610 may send indication information #1 (an example of the first indication information) to a sub-controller #1 (an example of the first sub-controller) in the plurality of sub-controllers 620, where the indication information #1 indicates a cache policy for an instance on a computing node #1 (an example of the first computing node) in the cluster. The sub-controller #1 performs instance caching on the instance on the computing node #1 based on the indication information #1. The primary controller 610 may send indication information #2 (an example of the second indication information) to a sub-controller #2 (an example of the second sub-controller) in the plurality of sub-controllers 620, where the indication information #2 indicates a cache policy for an instance on a computing node #2 (an example of the second computing node) in the cluster; and the sub-controller #2 performs instance caching on the instance on the computing node #2 based on the indication information #2.

The sub-controller #1 is a sub-controller corresponding to the computing node #1, and the sub-controller #2 is a sub-controller corresponding to the computing node #2. The computing node #1 may be any computing node in the cluster, the computing node #2 may be any computing node in the cluster, and the computing node #1 and the computing node #2 are different computing nodes.

For different sub-controllers 620, indication information obtained from the primary controller 610 may be the same. In other words, the indication information #1 and the indication information #2 may be the same. For example, the indication information may indicate cache policies for instances on all computing nodes. Alternatively, for different sub-controllers 620, indication information obtained from the primary controller 610 may be different. In other words, the indication information #1 and the indication information #2 may be different. For example, indication information obtained by each sub-controller 620 indicates only a cache policy for an instance on a computing node corresponding to the sub-controller 620.

For example, the sub-controller 620 may regularly obtain indication information from the primary controller 610, that is, periodically obtain indication information from the primary controller 610. For example, the indication information may be a global hotspot function list, and the primary controller and the sub-controller synchronize the global hotspot function list by using a timing synchronization mechanism. For example, the primary controller 610 collects statistics on a global hotspot function list every 30 minutes, and synchronizes the global hotspot function list to the sub-controller 620.

For example, after the cache policy that is for the instance on the computing node and that is determined by the primary controller 610 changes, the indication information may be sent to the sub-controller 620 corresponding to the computing node.

The foregoing is merely an example. The sub-controller 620 may alternatively obtain the indication information on another occasion. This is not limited in embodiments of this application.

For example, that the sub-controller 620 performs instance caching on the instance on the computing node based on the indication information may include at least one of the following: The sub-controller 620 caches an uncached instance on the computing node based on the indication information, the sub-controller 620 releases a cached instance on the computing node based on the indication information, or the sub-controller 620 adjusts a cache policy for a cached instance on the computing node based on the indication information.

For example, the cache policy for the instance on the computing node may include at least one of the following: target cache duration of the instance on the computing node, whether to cache one or more instances on the computing node, whether to release one or more instances on the computing node, or the like.

The primary controller 610 may determine or adjust the cache policy for the instance on each computing node based on invocation information of each function deployed in the cluster and/or related information of each computing node.

For example, the invocation information of the function may include at least one of a quantity of invocations of the function, load of the function, or the like.

For example, the related information of each computing node may include at least one of cache information of an instance on each computing node, an available resource of each computing node, or the like.

For example, the cache information of the instance on the computing node may include at least one of the following: a quantity of instances on the computing node, a status of the instance cached on the computing node, or the like.

For example, the primary controller 610 may determine a cache policy for an instance of a function in the cluster based on load of the function. For example, when the load of the function decreases, the primary controller 610 may send indication information to some computing nodes that cache an instance of the function, to indicate to release an idle instance of the function.

For another example, the primary controller 610 may determine the cache policy for the instance of the function based on cache information of the instance on each computing node in the cluster. For example, when an instance of a same function is cached on a plurality of computing nodes, the primary controller 610 may send indication information to some computing nodes that cache an instance of the function, to indicate to release an idle instance of the function.

For another example, the primary controller 610 may determine a cache policy for an instance of a function in the cluster based on a quantity of invocations of the function. For example, when the quantity of invocations of the function decreases, the primary controller 610 may send indication information to one or more computing nodes that cache an instance of the function, to indicate to adjust target cache duration of the function.

In the solution of embodiments of this application, the primary controller manages a cache policy for an instance on each computing node. In this way, the cache policy for the instance on each computing node can be determined or adjusted based on global information. This helps reduce unnecessary instance caching while reducing the incidence of cold start invocation, thereby reducing cache redundancy. In addition, cache resources of each computing node can be properly used, to alleviate a load imbalance problem, thereby reducing cache contention in the node. For example, the primary controller may determine or adjust the cache policy for the instance on each computing node based on a status of each computing node and/or invocation information of each function, to indicate a sub-controller to perform corresponding processing.

The indication information may be represented in a plurality of forms, provided that the sub-controller 620 can determine, based on the indication information, the cache policy for the instance on the computing node corresponding to the sub-controller 620.

The following describes the indication information by using an example in which the indication information indicates that the cache policy for the instance includes target cache duration of the instance.

For example, the indication information may indicate a correspondence between a function and target cache duration of an instance of the function. The target cache duration of the instance of the function corresponding to the function may also be referred to as target cache duration corresponding to the function.

The sub-controller 620 may determine target cache duration of an instance of a function on the computing node corresponding to the sub-controller 620 based on the function on the computing node and the correspondence between a function and target cache duration of an instance of the function.

For example, the indication information may indicate that target cache duration corresponding to a function A1 is duration #1, target cache duration corresponding to a function A2 is duration #2, and target cache duration corresponding to a function A3 is duration #3. One sub-controller 620 is used as an example. Functions on a computing node corresponding to the sub-controller 620 include the function A2 and the function A3. The sub-controller 620 may determine, based on the correspondence between a function and target cache duration of an instance of the function, that target cache duration of an instance of the function A2 is the duration #2, and target cache duration of an instance of the function A3 is the duration #3.

For example, the sub-controller 620 may determine target cache duration of an instance of a function on the computing node corresponding to the sub-controller 620 based on hotness of the function on the computing node and a mapping relationship between hotness of a function and target cache duration of an instance of the function.

In this case, the indication information may include at least one of the following: the hotness of the function, or the function mapping relationship between hotness of a function and target cache duration of an instance of the function.

For example, the function mapping relationship between hotness of a function and target cache duration of an instance of the function is pre-stored in the computing node, and the indication information indicates the hotness of the function on the computing node. For another example, the indication information indicates the function mapping relationship between hotness of a function and target cache duration of an instance of the function, and the computing node autonomously determines the hotness of the function.

Optionally, the target cache duration of the instance of the function is in a positive correlation with the hotness of the function.

In other words, a higher hotness of the function indicates longer target cache duration of the instance of the function.

For example, the sub-controller 620 may determine target cache duration of an instance of a function on the computing node corresponding to the sub-controller 620 based on a type of the function on the computing node and a correspondence between a type of a function and target cache duration of an instance of the function.

In this case, the indication information may include at least one of the following: the type of the function, or the correspondence between a type of a function and target cache duration of an instance of the function.

For example, the indication information indicates the type of the function and the target cache duration of the instance of the function, and the computing node autonomously determines the type of the function.

For another example, the indication information indicates the type of the function and the target cache duration of the instance of the function, and the type of the function on the computing node.

For another example, the type of the function and the target cache duration of the instance of the function are pre-stored in the computing node, and the indication information indicates the type of the function on the computing node. This is used as an example below for description.

Optionally, the type of the function may include a hotspot function or a non-hotspot function. Target cache duration corresponding to the hotspot function is greater than target cache duration corresponding to the non-hotspot function. The target cache duration corresponding to the hotspot function is target cache duration of an instance of a function of the hotspot function type. The target cache duration corresponding to the non-hotspot function is target cache duration of an instance of a function of the non-hotspot function type.

For example, the type of the function may be determined based on a quantity of invocations of the function in the cluster. In other words, whether the function is the hotspot function type or the non-hotspot function type may be determined based on the quantity of invocations of the function in the cluster.

Optionally, the primary controller may determine the type of the function in the cluster based on the quantity of invocations of the function in the cluster.

For specific descriptions of the hotspot function and the non-hotspot function, refer to the foregoing descriptions. Details are not described herein again.

The indication information #1 is used as an example. The indication information #1 may indicate a type of at least one function on the computing node #1. The cache policy for the instance on the computing node #1 includes target cache duration of the at least one instance. The target cache duration of the instance of the at least one function is determined based on the type of the at least one function and a correspondence between a type of a function on the computing node #1 and target cache duration of an instance of the function. Target cache duration of an instance of a function of the hotspot function type on the computing node #1 is greater than target cache duration of an instance of a function of the non-hotspot function type. In other words, target cache duration of an instance of a function corresponding to the hotspot function is greater than target cache duration of an instance of a function corresponding to the non-hotspot function.

For example, the indication information may indicate that the function on the computing node is a hotspot function or a non-hotspot function.

For example, the indication information may indicate that a type of the function A1 is the hotspot function, a type of the function A2 is the non-hotspot function, and a type of the function A3 is the hotspot function. The correspondence between a type of a function and target cache duration of an instance of the function may include: Target cache duration corresponding to the hotspot function is the duration #1, and target cache duration corresponding to the non-hotspot function is the duration #2. One sub-controller 620 is used as an example. Functions on a computing node corresponding to the sub-controller 620 include the function A2 and the function A3. The sub-controller 620 may determine, based on the indication information, that a type of the function A2 is the non-hotspot function, and a type of the function A3 is the hotspot function, so as to determine that target cache duration of an instance of the function A2 is the duration #2, and target cache duration of an instance of the function A3 is the duration #1.

For example, the indication information may indicate a hotspot function. For example, the indication information may be a global hotspot view.

For example, the sub-controller 620 may periodically communicate with the primary controller 610 to synchronize a global hotspot view.

For example, the indication information may include the function A1 and the function A3. The correspondence between a type of a function and target cache duration of an instance of the function may include: Target cache duration corresponding to the hotspot function is the duration #1, and target cache duration corresponding to the non-hotspot function is the duration #2. One sub-controller 620 is used as an example. Functions on a computing node corresponding to the sub-controller 620 include the function A2 and the function A3. The sub-controller 620 may determine, based on the indication information, that a type of the function A2 is the non-hotspot function, and a type of the function A3 is the hotspot function, so as to determine that target cache duration of an instance of the function A2 is the duration #2, and target cache duration of an instance of the function A3 is the duration #1.

For example, the indication information may indicate a non-hotspot function. For example, the indication information may be a global non-hotspot function list.

The foregoing solution may be implemented by partitioning a memory of a computing node.

For example, a memory of each computing node may include a first area and a second area. The first area and the second area may be used to cache instances.

For descriptions of the first area and the second area, refer to related descriptions in the method 200. To avoid repetition, some descriptions are properly omitted in the following.

Optionally, target cache duration of an instance in the first area is greater than target cache duration of an instance in the second area.

Optionally, the first area may be used to cache an instance of a hotspot function, and the second area may be used to cache an instance of a non-hotspot function.

"First" and "second" in the first area and the second area are only used to limit two areas in the memory, and do not have other limitation functions.

The computing node #1 is used as an example. A memory of the computing node #1 may include a first area and a second area.

Target cache duration of an instance cached in the first area is greater than target cache duration of an instance cached in the second area.

For example, the first area may be used to cache an instance of a function that is invoked more frequently, and the second area may be used to cache an instance of a function that is invoked less frequently.

Optionally, the first area is used to cache an instance of a function of the hotspot function type on the computing node #1, and the second area is used to cache an instance of a function of the non-hotspot function type on the computing node #1.

After obtaining the indication information, the sub-controller 620 may determine, based on the indication information, a cache area of an instance on the computing node corresponding to the sub-controller 620.

The following uses the computing node #1 as an example for description.

The sub-controller #1 may adjust, based on the indication information #1, quantities of instances cached in the first area and the second area of the computing node #1, and update lifecycles of the instances, to reduce cache resource redundancy.

The sub-controller #1 may transfer an instance of a function between the first area and the second area based on the indication information #1.

Optionally, before the primary controller sends the indication information #1 to the sub-controller #1, an instance of a function #1 on the computing node #1 is cached in the first area. In this case, that the sub-controller #1 performs instance caching on the instance on the computing node #1 based on the indication information #1 may include: The sub-controller #1 transfers the instance of the function #1 from the first area to the second area. Alternatively, before the primary controller sends the indication information #1 to the sub-controller #1, an instance of a function #2 on the computing node #1 is cached in the second area, and that the sub-controller #1 performs instance caching on the instance on the computing node #1 based on the indication information #1 includes: The sub-controller #1 transfers the instance of the function #2 from the second area to the first area.

For example, the indication information #1 may directly indicate a cache location of an instance of a function in the memory. The sub-controller #1 may transfer the instance of the function between the first area and the second area based on the cache location, indicated by the indication information #1, of the instance of the function in the memory.

For example, if the instance of the function #1 is originally cached in the first area, and the indication information #1 indicates to cache the instance of the function #1 in the second area, the sub-controller #1 may transfer the instance of the function #1 from the first area to the second area.

Alternatively, the indication information #1 may indicate a quantity of invocations of the function. The sub-controller #1 may transfer the instance of the function between the first area and the second area based on the quantity, indicated by the indication information #1, of invocations of the function.

When the quantity of invocations of the function is large, the instance of the function may be cached in the first area. When the quantity of invocations of the function is small, the instance of the function may be cached in the second area.

For example, if the instance of the function #1 is originally cached in the first area, and a quantity, indicated by the indication information #1, of invocations of the function #1 is greater than a specified value, the sub-controller #1 may transfer the instance of the function #1 from the first area to the second area.

In embodiments of this application, a cache location of an instance of a function may be adjusted according to a cache policy for the instance, that is, target cache duration of the function may be adjusted. This helps further improve cache resource utilization. For example, if a quantity of original invocation requests for the function is small, the instance of the function may be cached in the second area. When the invocation requests for the function increase, the cache policy may be adjusted to transfer the instance of the function from the second area to the first area. If a quantity of original invocation requests for the function is large, the instance of the function may be cached in the first area. When the invocation requests for the function decrease, the cache policy may be adjusted to transfer the instance of the function from the first area to the second area. In this way, a fluctuation status of the invocation requests for the function can be adapted, to help further improve cache resource utilization.

For example, the sub-controller #1 may transfer the instance of the function between the first area and the second area based on the type, indicated by the indication information #1, of the function.

Optionally, the instance on the computing node #1 includes the instance of the function #1, the instance of the function #1 is cached in the first area, the indication information #1 indicates that a type of the instance of the function #1 is the non-hotspot function, and that the sub-controller #1 performs instance caching on the instance on the computing node #1 based on the indication information #1 may include: The sub-controller #1 transfers the instance of the function #1 from the first area to the second area.

For example, the function #1 is currently a hotspot function, and the instance of the function #1 is cached in the first area. The primary controller updates the global hotspot function list, and an updated global hotspot function list does not include the function #1, that is, the type of the function #1 is adjusted from the hotspot function to a non-hotspot function. The sub-controller #1 transfers the instance of the function #1 from the first area to the second area.

Optionally, the instance on the computing node #1 includes the instance of the function #2, the instance of the function #2 is cached in the second area, the indication information #1 indicates that a type of the instance of the function #2 is the non-hotspot function, and that the sub-controller #1 performs instance caching on the instance on the computing node #1 based on the indication information #1 may include: The sub-controller #1 transfers the instance of the function #2 from the second area to the first area.

For example, the function #2 is currently a hotspot function, and the instance of the function #2 is cached in the second area. The primary controller updates the global hotspot function list, and an updated global hotspot function list includes the function #2, that is, the type of the function #2 is adjusted from the non-hotspot function to a hotspot function. The sub-controller #1 transfers the instance of the function #2 from the second area to the first area.

Optionally, the instance on the computing node #1 includes an instance of a function #4, the indication information #1 indicates that a type of the instance of the function #4 is the hotspot function, and that the sub-controller #1 performs instance caching on the instance on the computing node #1 based on the indication information #1 may include: The sub-controller #1 caches the instance of the function #4 in the first area.

For example, the computing node #1 is a scheduling node, and the scheduling node creates the instance of the function #4. After an invocation request for the function #4 is executed, the sub-controller #1 obtains a global hotspot function list, where the global hotspot function list includes the function #4; and caches the instance in a first area of the scheduling node.

Optionally, the instance on the computing node #1 includes an instance of a function #5, the indication information #1 indicates that a type of the instance of the function #5 is the non-hotspot function, and that the sub-controller #1 performs instance caching on the instance on the computing node #1 based on the indication information #1 may include: The sub-controller #1 caches the instance of the function #5 in the second area.

For example, the computing node #1 is a scheduling node, and the scheduling node creates the instance of the function #5. After an invocation request for the function #5 is executed, the sub-controller #1 obtains a global hotspot function list, where the global hotspot function list does not include the function #5; and caches the instance in a second area of the scheduling node.

Optionally, the target cache duration corresponding to the non-hotspot function is greater than 0.

In the solution of embodiments of this application, a cache resource may be allocated to the non-hotspot function for caching. This helps reduce a decision error caused by insufficient hotness recognition precision or latency, and helps reduce an occurrence frequency of cold start.

Optionally, the target cache duration corresponding to the hotspot function may not be limited. For example, the target cache duration corresponding to the hotspot function may be a large value. In other words, the instance of the hotspot function is not limited by lifecycle duration, and may be stored for a long time.

The target cache duration corresponding to the non-hotspot function is a finite value. Caching of the instance of the non-hotspot function is limited by the lifecycle duration. Specifically, when time for which the instance of the non-hotspot function on the computing node is in an idle state exceeds a period of time, that is, target cache duration of the instance of the non-hotspot function exceeds a period of time, the instance is released. Alternatively, the target cache duration corresponding to the non-hotspot function may be 0, that is, the instance of the non-hotspot function is not cached.

Further, the instance of the hotspot function that is cached on the computing node is not evicted by a creation event of another instance on the computing node.

The instance of the non-hotspot function that is cached on the computing node may be evicted by a creation event of another instance on the computing node. For example, when an available resource on the computing node is insufficient to create a new instance, the instance of the non-hotspot function that is cached on the computing node may still be forcibly evicted even when the target cache duration corresponding to the non-hotspot function does not expire, to release a resource.

For specific descriptions of performing caching based on the hotspot function and the non-hotspot function, refer to the foregoing method 200. Details are not described herein again.

In the solution of embodiments of this application, the instance of the hotspot function is not evicted by a creation event of another instance, so as to avoid eviction of the instance of the hotspot function caused by resource contention. This ensures a cache status of the instance of the hotspot function, and helps further reduce an occurrence frequency of cold start.

In the solution of embodiments of this application, the hotspot function and the non-hotspot function are distinguished. Target cache duration of the hotspot function is greater than target cache duration of the non-hotspot function, that is, a resource is preferentially allocated to cache the hotspot function. This helps avoid a waste of cache resources while reducing the incidence of cold start invocation, that is, helps improve cache resource utilization. Specifically, because the hotspot function is invoked more frequently, a resource is preferentially allocated to cache the hotspot function. This helps improve a hit rate of caching the instance, thereby reducing an occurrence frequency of cold start to reduce response latency, and avoiding allocating a large quantity of cache resources to the non-hotspot function. This helps avoid a waste of cache resources. In addition, functions are classified into the hotspot function and the non-hotspot function, and target cache duration of an instance of a function can be determined based on a type of the function, so that implementation is more convenient and efficient.

It should be understood that the foregoing is merely an example, and the indication information may alternatively be expressed in another form. This is not limited in embodiments of this application.

Optionally, the sub-controller 620 may be further configured to adjust a quantity of instances of a hotspot function on the computing node corresponding to the sub-controller 620 based on load of the hotspot function.

The sub-controller 620 may monitor a change of load of a hotspot function on a corresponding computing node, and if the load decreases, a quantity of instances of the hotspot function may be correspondingly reduced.

For specific descriptions, refer to the foregoing method 200. Details are not described here again.

This helps further reduce memory consumption of instance caching, and avoid unnecessary instance caching, thereby helping avoid cache redundancy.

Further, the solution of embodiments of this application may be further used in combination with an active cache policy based on load prediction.

The active cache policy means predicting an arrival interval of an invocation request for a function, and dynamically releasing and preheating corresponding function instances.

For example, instances of some functions in the cluster are cached by using the active cache policy, and instances of some other functions in the cluster are cached by using the solution of embodiments of this application.

For example, 10000 functions are deployed in the cluster in total, and instances of 1000 of the functions are cached by using the active cache policy. Instances of the remaining 9000 functions may be cached by using the solution of embodiments of this application.

For example, instances of some functions in the cluster are cached by using the active cache policy. When cold start is triggered, instances of all functions may be cached based on the solution of embodiments of this application.

One primary controller 610 may alternatively be implemented by a plurality of controllers. For example, the primary controller 610 may be configured to implement instance scheduling and instance caching management. The two functions may be respectively performed by two controllers. The primary controller 610 may include a controller #1 and a controller #2. The controller #1 is configured to implement instance scheduling. The controller #2 is configured to implement instance caching management. The controller #1 and the controller #2 may be located on a same node, or may be located on different nodes. For example, the controller #1 may be deployed in a gateway. In other words, a function of the controller #1 may be implemented by a gateway.

It should be understood that the system 600 shown in FIG. 6 is merely an example, and does not constitute a limitation on the solution of embodiments of this application.

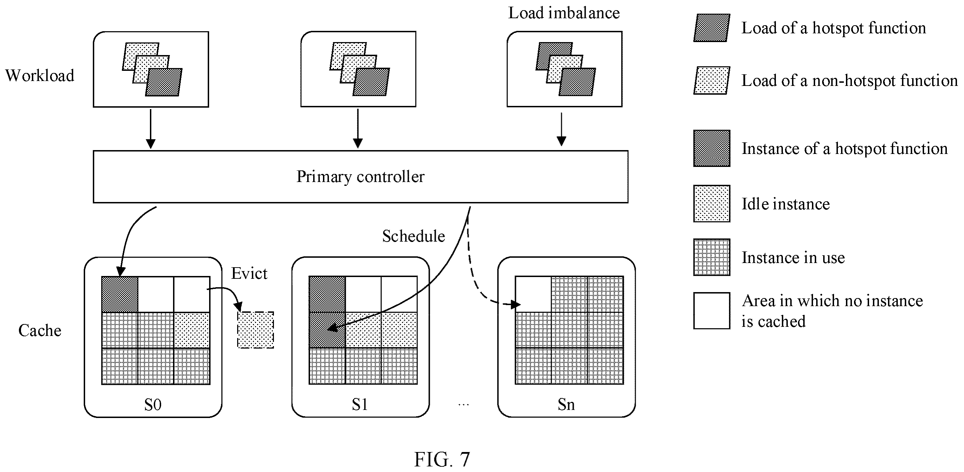

FIG. 7 is a diagram of a cache control procedure according to an embodiment of this application.

The cache control procedure shown in FIG. 7 may be implemented by using the cache system shown in FIG. 6. As shown in FIG. 7, a primary controller may implement cluster-level instance scheduling and management. In a distributed cache architecture, computing nodes do not collaborate with each other. For example, as shown in FIG. 1, load borne by Sn is higher than load borne by another computing node. However, in the distributed cache architecture, a gateway may still forward an invocation request for a hotspot function to Sn for processing, thereby further aggravating a load imbalance problem. In a centralized cache architecture shown in FIG. 7, the primary controller may use S0 and S1 as scheduling nodes of the hotspot function, and S0 and S1 create instances of the hotspot function. As shown in FIG. 7, the primary controller schedules S1 to execute the invocation request for the hotspot function that is forwarded to Sn in FIG. 1, and the invocation request for the hotspot function that is forwarded to Sn in FIG. 1 is forwarded to S1 in FIG. 7.

In the solution of embodiments of this application, an idle instance of a non-hotspot function may be evicted. As shown in FIG. 7, an idle instance on S0 is evicted. For example, if an available resource on a computing node (such as S0) is insufficient to start a new instance, an idle instance may be evicted. For another example, when instances of a same function exist on a plurality of computing nodes, idle instances of the function on some computing nodes (such as S0) may be evicted.

For clear description, FIG. 7 shows only three computing nodes. In an actual scenario, a cluster may include more or fewer computing nodes, and each computing node may cache more or fewer instances. In addition, the cluster may further include another module, for example, a load dispatcher, and the invocation request may be forwarded by the load dispatcher.

The following describes a possible application scenario of embodiments of this application.

The solution in embodiments of this application may be used to provide an instance caching acceleration function, to reduce the incidence of cold start, and reduce cache occupation. Specifically, an interface may be provided on an interaction interface, and the interface is used by a user to select whether to enable the instance caching acceleration function. If the user enables the function, the cache control system 600 may perform the solution in embodiments of this application. For example, the cache control system 600 may collect invocation information of a function of the user, for example, a quantity of invocations of the function, detect a hotspot function at a cluster level, and cache, based on a type of the function by using a cache policy for a hotspot function or a cache policy for a non-hotspot function, an instance of the function deployed by the user. For specific descriptions, refer to the method 200, the system 600, or the method 1000. Details are not described herein again. If the user disables the function, functions deployed by the user may be filtered, and instances of the functions deployed by the user may be cached based on the cache policy for the non-hotspot function. Alternatively, if the user disables the function, an instance of a function deployed by the user may be cached by using an existing solution. This is not limited in embodiments of this application.

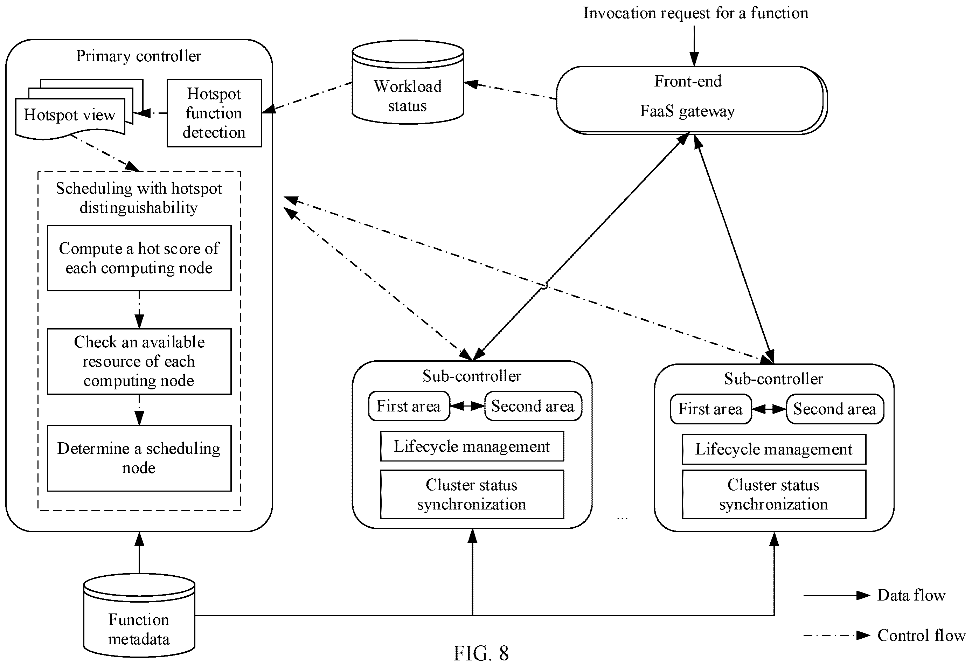

FIG. 8 is a diagram of a centralized cache architecture according to an embodiment of this application. The cache control architecture is a centralized cache control architecture based on software-defined networking (software-defined networking, SDN) centralized control, and can implement cluster-level instance caching and resource allocation. The control architecture shown in FIG. 8 may be considered as a specific implementation of the system shown in FIG. 6. For related descriptions, refer to the system 600 shown in FIG. 6. To avoid repetition, some descriptions are properly omitted when the system 600 is described. The control architecture shown in FIG. 8 is a two-layer architecture of "top-layer controller + bottom-layer sub-controller", including a centralized cluster-level primary controller and a plurality of sub-controllers located in computing nodes. The cache architecture may perform communication in a plurality of manners. For example, the communication manner may include any one of the following: communication based on remote procedure call (remote procedure call, RPC), communication based on a message queue, communication based on a JS object notation (JavaScript object notation, JSON) character string stream transferred in a Web manner, or communication based on remote method invocation (remote method invocation, RMI). The communication manner is not limited in embodiments of this application.

For example, the primary controller may be configured to collect statistics on related information of each computing node in the cluster. For example, the related information of each computing node in the cluster includes resource information of each computing node in the cluster. The primary controller may be further configured to maintain a global resource view. The global resource view indicates the resource information of each computing node. For another example, the related information of each computing node in the cluster may include cache information of an instance on each computing node in the cluster.

For example, as shown in FIG. 8, the primary controller may be used for hotspot function detection (hotspot function detection). For example, the primary controller may collect data of an invocation counter to dynamically detect a hotspot function. For example, the data of the invocation counter may be stored in a separate module (for example, a database) as workload status (workload status) information. As shown in FIG. 8, the primary controller may determine the data of the invocation counter based on the workload status information. The gateway may send invocation statistics information of a function to the database for storage as a workload status.

Further, the primary controller may update a global hotspot view based on a detection result of the hotspot function, that is, the primary controller may be configured to maintain the global hotspot view.

For example, as shown in FIG. 8, the primary controller may be configured to implement instance scheduling based on hotness of a function, that is, implement scheduling with hotness distinguishability. For example, the primary controller may compute accumulated hotness of each computing node based on the global hotspot view, that is, compute a hot score (hot-score) of each computing node, and determine an available resource of each computing node, so as to determine a scheduling node based on a minimum hotness accumulation principle, that is, determine a creation location of an instance of a function, where the creation location may be a function cache location (function cache placement).

For example, the gateway may forward an invocation request for the function to a sub-controller. After the invocation request is executed, the sub-controller may return an execution result to the gateway.

For example, as shown in FIG. 8, the sub-controller may be configured to implement cluster status synchronization. For example, the sub-controller may be configured to collect related information of a corresponding computing node, and synchronize the information to the primary controller. For another example, the sub-controller may obtain the global hotspot view from the primary controller.

Further, the sub-controller may further synchronize the related information of the computing node, for example, cache information of an instance, to the gateway.

For example, as shown in FIG. 8, the sub-controller may be configured to manage a lifecycle of an instance cached in the corresponding computing node. For example, the sub-controller may include a lifecycle manager, and the lifecycle manager may manage, based on the global hotspot view, the lifecycle of the instance cached in the corresponding computing node.

For example, the sub-controller may be configured to implement resource management. For example, as shown in FIG. 8, the sub-controller may be configured to implement transfer of instances cached in a first area and a second area.

For example, the sub-controller may be configured to execute a control instruction of the primary controller.

In the solution shown in FIG. 8, basic information of the function is indicated by function metadata (function metadata). For example, the basic information of the function may include at least one of the following: a name of the function, a memory specification, execution time of the function, a name of a function image, or the like.

For specific descriptions, refer to related descriptions in the system 600 or the method 1000. Details are not described herein again.

The following describes a method 1000 in an embodiment of this application by using an example with reference to FIG. 8. The method 1000 may be considered as a specific implementation of the method 200. The method 1000 may be performed by the cache control system 600 shown in FIG. 6. In the method 1000, the cache control system may analyze a workload characteristic of a cluster, that is, analyze invocation information of a function in the cluster, detect a hotspot function in the cluster, and implement caching with reference to a cache policy with hotspot function distinguishability. This helps avoid unnecessary cache overheads while reducing an occurrence frequency of cold start, that is, reduce cache overheads while improving service latency, thereby improving utilization of cache resources in the cluster.

The method 1000 includes step 1010 to step 1060. The following describes the method 1000.

1010: A front-end (front-end) FaaS gateway determines whether there is an available instance of a function. If there is an available instance of the function, step 1020 is performed; or if there is no available instance of the function, cold start invocation is triggered, and step 1030 is performed.

A user may send an invocation request for a deployed function. The invocation request for the function reaches the gateway first. The gateway may determine whether there is an available instance of the function in each computing node.

It should be understood that step 1010 is merely an example, and does not constitute a limitation on the solution of embodiments of this application. For example, in another possible implementation, the action in step 1010 may alternatively be performed by a primary controller, that is, determining whether there is an available instance of the function may alternatively be performed by the primary controller.

1020: The gateway forwards the invocation request for the function to a computing node that has an available instance of the function.

For example, the gateway may forward the invocation request for the function based on a hash consistency policy.

For example, the gateway may randomly forward the invocation request for the function.

For example, the gateway may forward the invocation request for the function based on a minimum load principle. That is, a node with lowest load is selected from computing nodes having available instances of the function, to forward the invocation request.

For example, the gateway receives an invocation request for a function B1, and there are available instances of the function B1 on five computing nodes in the cluster. The five computing nodes are respectively a node A1, a node A2, a node A3, a node A4, and a node A5, and load amounts are respectively 80%, 70%, 55%, 25%, and 90%. A computing node with lowest load is the node A4, and the gateway forwards the invocation request for the function B1 to the node A4. After execution is completed, the node A4 returns an execution result to the gateway.

It should be understood that the foregoing is merely an example, and the gateway may alternatively perform forwarding based on another forwarding rule.

1030: A primary controller determines a scheduling node.

The gateway may invoke the primary controller to perform instance scheduling.

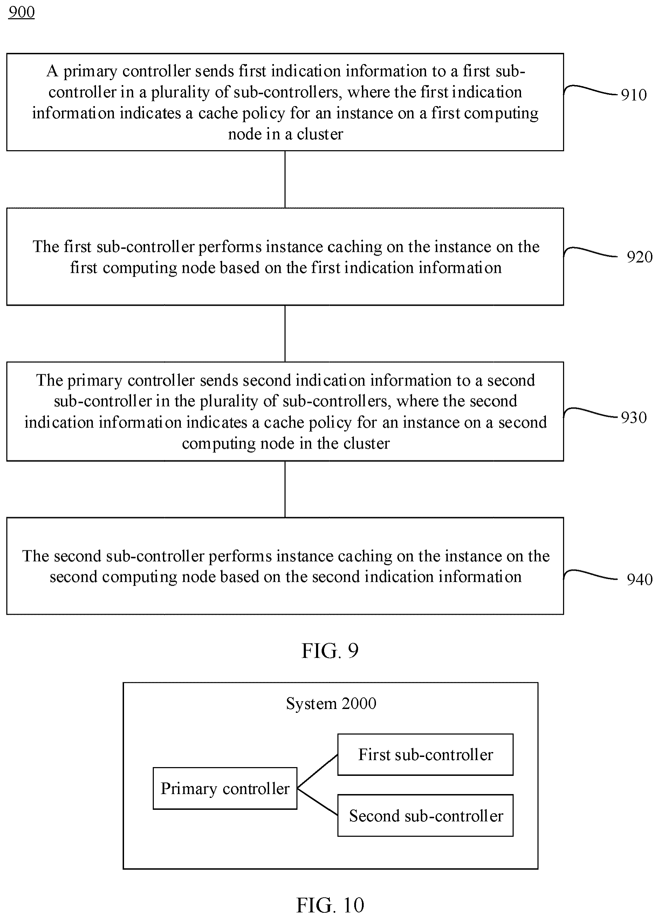

The primary controller is triggered to execute a scheduling request, and determines a node for creating an instance of the function, that is, the scheduling node. As shown in FIG. 9, the gateway forwards the invocation request for the function to a sub-controller in the scheduling node.

A sub-controller of each computing node may perform cluster status synchronization. Specifically, the sub-controller of each computing node may report related information of the computing node to the primary controller.

For example, the primary controller may determine the scheduling node based on a minimum hotness accumulation principle.

Accumulated hotness of the computing node may be computed by the primary controller. For example, for a computing node, accumulated hotness of the computing node may be a sum of products of hotness of all hotspot functions on the computing node and quantities of cached instances of the hotspot functions. The hotness of the function may be determined by the primary controller, or may be received by the primary controller from another module, for example, from the gateway. The hotspot function may be determined by the primary controller, or may be determined by another module. For example, the gateway determines the hotspot function and notifies the primary controller.

For example, after being triggered to execute the scheduling request, the primary controller may compute the accumulated hotness of each computing node in the cluster, and then determine the scheduling node based on the minimum hotness accumulation principle.

For example, after being triggered to execute the scheduling request, the primary controller may read a global hotspot function list, or receive a global hotspot function list from the gateway. The global hotspot function list may indicate all hotspot functions in the cluster. Further, the global hotspot function list may further indicate hotness of all the hotspot functions. The primary controller may compute the accumulated hotness of each computing node based on the global hotspot function list. For example, if a quantity of invocation requests for the function that arrive between an update moment of a stored global hotspot function list and a reading moment of the global hotspot function list is less than or equal to a threshold #3, the primary controller may directly read the stored global hotspot function list; or if a quantity of invocation requests for the function that arrive between an update moment of a stored global hotspot function list and a reading moment of the global hotspot function list is not less than or equal to a threshold #3, the primary controller may re-detect a hotspot function to update the global hotspot function list, or the gateway re-detects a hotspot function, to update the global hotspot function list. For another example, if a distance between an update moment of a stored global hotspot function list and a reading moment of the global hotspot function list is less than or equal to a threshold #4, the primary controller may directly read the stored global hotspot function list; or if a distance between an update moment of a stored global hotspot function list and a reading moment of the global hotspot function list is not less than or equal to a threshold #4, the primary controller may re-detect a hotspot function to update the global hotspot function list, or the gateway re-detects a hotspot function.

For example, after being triggered to execute the scheduling request, the primary controller may read the accumulated hotness of each computing node in the cluster, and then determine the scheduling node based on the minimum hotness accumulation principle. The accumulated hotness of each computing node in the cluster may be pre-computed and stored by the primary controller. For example, if a quantity of invocation requests for the function that arrive between an update moment of a stored accumulated hotness of each computing node and a reading moment of the accumulated hotness of each computing node is less than or equal to a threshold #3, the primary controller may directly read the stored accumulated hotness of each computing node; or if a quantity of invocation requests for the function that arrive between an update moment of a stored accumulated hotness of each computing node and a reading moment of the accumulated hotness of each computing node is not less than or equal to a threshold #3, the primary controller may re-compute accumulated hotness of each computing node. For another example, if a distance between an update moment of a stored accumulated hotness of each computing node and a reading moment of the accumulated hotness of each computing node is less than or equal to a threshold #4, the primary controller may directly read the stored accumulated hotness of each computing node; or if a distance between an update moment of a stored accumulated hotness of each computing node and a reading moment of the accumulated hotness of each computing node is not less than or equal to a threshold #4, the primary controller may re-compute accumulated hotness of each computing node.

For example, after being triggered to execute the scheduling request, the primary controller may receive the accumulated hotness of each computing node in the cluster, and then determine the scheduling node based on the minimum hotness accumulation principle. For example, the accumulated hotness of each computing node in the cluster may be computed by the gateway, and sent by the gateway to the primary controller.

The following uses an example to describe a manner of computing accumulated hotness of a computing node.

It is assumed that functions deployed in the cluster include a function B1, a function B2, a function B3, a function B4, and a function B5. The cluster includes five computing nodes, that is, a node A1, a node A2, a node A, a node A4, and a node A5. The following uses the function B1 as an example to describe a manner of computing hotness of a function.

An invocation counter corresponding to the function B1 restarts counting at intervals. Quantities counted by the invocation counter corresponding to the function B1 in five counting cycles are respectively 540, 230, 200, 100, and 590 in chronological order. Hotness of the function B1 is computed as 540*1/16+230*1/8+200*1/4+100*1/2+590=752.5 according to a binary decay algorithm. According to the same method, it can be learned that a score of the function B2 is 249.2, a score of the function B3 is 158.6, hotness of the function B4 is 83.6, and hotness of the function B5 is 63.5.

It should be understood that the foregoing is merely an example, and the hotness of the function may be alternatively determined in another manner.

The hotness of the five functions are sorted in descending order as follows: 752.5, 249.2, 158.6, 83.6, and 63.5. A quantity of hotspot functions may satisfy the following condition: a value that minimizes the quantity of hotspot functions when a ratio of a sum of hotness of all the hotspot functions to a sum of the hotness of the five functions is greater than or equal to 80%. That is, m=5, and the threshold #1 is 80%. 80% of the sum of the hotness of the five functions is 1307.4*0.8=1045.92. A sum of the hotness of the function B1, the function B2, and the function B3 is 752.5+249.2+158.6>1045.92, and therefore, it is learned that hotspot functions are the function B1, the function B2, and the function B3. The global hotspot function list may include the function B1, the function B2, and the function B3, and corresponding hotness thereof. The primary controller may read the global hotspot function list, and compute the accumulated hotness of each computing node based on the list.

A cache status of instances on the node A1 is as follows: Quantities of instances of the function B1, the function B2, the function B3, the function B4, and the function B5 are 10, 4, 8, 8, and 1 respectively. A cache status of instances on the node A2 is as follows: Quantities of instances of the function B1, the function B2, the function B3, the function B4, and the function B5 are 5, 5, 7, 6, and 8 respectively. A cache status of instances on the node A3 is as follows: Quantities of instances of the function B1, the function B2, the function B3, the function B4, and the function B5 are 2, 2, 7, 4, and 7 respectively. A cache status of instances on the node A4 is as follows: Quantities of instances of the function B1, the function B2, the function B3, the function B4, and the function B5 are 6, 9, 8, 1, and 0 respectively. A cache status of instances on the node A5 is as follows: Quantities of instances of the function B1, the function B2, the function B3, the function B4, and the function B5 are 0, 5, 8, 8, and 4 respectively. Accumulated hotness of a node may be a sum of products of quantities of instances of hotspot functions on the node and hotness of the hotspot functions. Hotspot functions on the node A1 are the function B1, the function B2, and the function B3, and accumulated hotness of the node A1 is 752.5*10+249.2*4+158.6*8=9790.6. According to the same method, it can be learned that accumulated hotness of the node A2 is 6118.7, accumulated hotness of the node A3 is 3113.6, accumulated hotness of the node A4 is 8026.6, and accumulated hotness of the node A5 is 2514.8.

A resource capacity of each computing node in the node A1, the node A2, the node A3, the node A4, and the node A5 is 25600 MB, and memory requirements of instances of the function B1, the function B2, the function B3, the function B4, and the function B5 are 256 MB, 128 MB, 512 MB, 256 MB, and 1024 MB respectively. Remaining available cache resource quantities on the node A1, the node A2, the node A3, the node A4, and the node A5 are 15360 MB, 10368 MB, 13056 MB, 18560 MB and 14720 MB respectively. Ratios of the accumulated hotness of the computing nodes to the remaining available cache resource quantities are computed as 0.63, 0.59, 0.24, 0.43, and 0.17 respectively. The node A5 with a smallest ratio (0.17) is selected as an instance creation node, that is, the scheduling node, to execute the invocation request for the function. The gateway may forward the invocation request for the function to the node A5, and the node A5 creates and executes an instance.

1040: Create an instance of the function and execute the invocation request. After the request is executed, if the function is a hotspot function, step 1050 is performed; or if the function is not a hotspot function, step 1060 is performed.

The scheduling node receives and executes the invocation request for function that is forwarded by the gateway. Specifically, the sub-controller may pull a function image, and create the instance of the function, to execute the invocation request. After the invocation request is executed, the sub-controller may return an execution result to the gateway.

For example, after the invocation request for the function is executed, the sub-controller may query a local global hotspot function list to determine whether to cache the function. If the function needs to be cached, the sub-controller manages a lifecycle of the instance. For example, the primary controller may be configured to maintain the global hotspot function list, and the sub-controller may synchronize the global hotspot function list from the primary controller, and manage the lifecycle of the instance based on the list.

For example, the sub-controller may periodically synchronize the global hotspot function list.

For example, the sub-controller may synchronize an updated global hotspot function list when the global hotspot function list is updated.

After the request is executed, the sub-controller may determine, based on the global hotspot function list, whether the function is a hotspot function or a non-hotspot function, and use different cache policies for the hotspot function and the non-hotspot function. In other words, the sub-controller may update cache areas of an instance of the hotspot function and an instance of the non-hotspot function based on the global hotspot function list, that is, cache the instance of the hotspot function and the instance of the non-hotspot function in different cache areas.

It should be understood that the foregoing is merely an example, and does not constitute a limitation on the solution of embodiments of this application. For example, in another possible implementation, after the invocation request for the function is executed, the primary controller may alternatively notify the sub-controller corresponding to the scheduling node whether to cache the instance. If the instance needs to be cached, the sub-controller manages a lifecycle of the instance.

1050: Cache the instance of the function in a first area.

1060: Cache the instance of the function in a second area.

Using the node A5 as an example, a cache status of instances on the node A5 is as follows: Quantities of instances of the function B1, the function B2, the function B3, the function B4, and the function B5 are 0, 5, 8, 8, and 4 respectively. Memory requirements of the instances of the five functions are 256 MB, 128 MB, 512 MB, 256 MB, and 1024 MB respectively. Total cache resources on the node A5 are 25600 MB. For example, the global hotspot function list indicates that hotspot functions are the function B1, the function B2, and the function B3. A quantity of resources occupied by cached instances of the hotspot functions in the first area is 5*128+8*512=4736 MB. A quantity of resources occupied by cached instances of the non-hotspot functions in the second area is 8*256+4*1024=6144 MB. The node A5 receives the invocation request for the function B1, and creates an instance of the function B1. After the invocation request is executed, the instance of the function B1 is cached in the first area. In this case, a quantity of resources occupied by cached instances of the hotspot functions in the first area is 1*256+5*128+8*512=4992 MB.

Further, the sub-controller may update the global hotspot function list. After the sub-controller updates the global hotspot function list, cache resources on the computing node are adjusted based on an updated global hotspot function list. For example, the updated global hotspot function list indicates that hotspot functions are the function B1 and the function B2. The function B3 changes from a hotspot function to a non-hotspot function. The sub-controller transfers an instance of the function B3 cached in the first area to the second area. In this case, a quantity of resources occupied by cached instances of the hotspot functions in the first area is 1*256+5* 128=896 MB, and a quantity of resources occupied by cached instances of the non-hotspot functions in the second area is 8*512+8*256+4*1024=10240 MB.

After function invocation in the second area of the computing node ends, that is, after the invocation request is executed, if a type of the function does not change, that is, the function is still a non-hotspot function, the sub-controller may monitor survival time of the function based on keep-alive duration, that is, target cache duration corresponding to the non-hotspot function.

Using the function B3 as an example, if no subsequent invocation request for the function B3 arrives within a keep-alive period, the instance of the function B3 is automatically released. In this case, a quantity of resources occupied by cached instances of the non-hotspot functions in the second area is 8*256+4*1024=6144 MB.

In the solution of embodiments of this application, an instance cache solution in which hotspot functions can be distinguished is used. Compared with a passive cache policy based on priority replacement, this solution can reduce a cold start rate by 20 times. When a same cold start rate is maintained, this solution can reduce cache resource occupation by 35%.

FIG. 9 is a schematic flowchart of a function cache method according to an embodiment of this application. The method 900 shown in FIG. 9 may be performed by the cache control system 600 shown in FIG. 6. The method 900 may be understood as an example of an execution process of the cache control system 600 shown in FIG. 6. For specific descriptions, refer to related descriptions of the system 600. To avoid repetition, some descriptions are properly omitted when the method 900 is described.

910: A primary controller sends first indication information to a first sub-controller in a plurality of sub-controllers, where the first indication information indicates a cache policy for an instance on a first computing node in a cluster.

920: The first sub-controller performs instance caching on the instance on the first computing node based on the first indication information.

930: The primary controller sends second indication information to a second sub-controller in the plurality of sub-controllers, where the second indication information indicates a cache policy for an instance on a second computing node in the cluster.

940: The second sub-controller performs instance caching on the instance on the second computing node based on the second indication information.

It should be understood that numbers of the steps in the method 900 are merely for ease of description, and do not constitute a limitation on an execution sequence of the steps. For example, step 910 and step 930 may be performed simultaneously, and step 920 and step 940 may be performed simultaneously.

For example, the first sub-controller may be the foregoing sub-controller #1. The second sub-controller may be the foregoing sub-controller #2.

For example, the first computing node may be the foregoing computing node #1. The second computing node may be the foregoing computing node #2.

For example, the first indication information may be the foregoing indication information #1. The second indication information may be the foregoing indication information #2.

In the solution of embodiments of this application, the primary controller manages a cache policy for an instance on each computing node. In this way, the cache policy for the instance on each computing node can be determined or adjusted based on global information. This helps reduce unnecessary instance caching while reducing the incidence of cold start invocation, thereby reducing cache redundancy. In addition, cache resources of each computing node can be properly used, to alleviate a load imbalance problem, thereby reducing cache contention in the node. For example, the primary controller may determine or adjust the cache policy for the instance on each computing node based on a status of each computing node and/or invocation information of each function, to indicate a sub-controller to perform corresponding processing.

Optionally, the first sub-controller is deployed on the first computing node, the second sub-controller is deployed on the second computing node, and the primary controller is deployed on a control node.

Optionally, a memory of the first computing node includes a first area and a second area. An instance of a first function on the first computing node is cached in the first area before the primary controller sends the first indication information to the first sub-controller in the plurality of sub-controllers, and that the first sub-controller performs instance caching on the instance on the first computing node based on the first indication information includes: The first sub-controller transfers the instance of the first function from the first area to the second area. Alternatively, an instance of a second function on the first computing node is cached in the second area before the primary controller sends the first indication information to the first sub-controller in the plurality of sub-controllers, and that the first sub-controller performs instance caching on the instance on the first computing node based on the first indication information includes: The first sub-controller transfers the instance of the second function from the second area to the first area.

Optionally, target cache duration of an instance cached in the first area is greater than target cache duration of an instance cached in the second area.

Optionally, the cache policy for the instance on the first computing node includes target cache duration of an instance of at least one function on the first computing node, the first indication information indicates a type of the at least one function, the type of the at least one function includes a hotspot function or a non-hotspot function, and in the at least one function, target cache duration of an instance of a function of the hotspot function type is greater than target cache duration of an instance of a function of the non-hotspot function type.

Optionally, a memory of the first computing node includes a first area and a second area, the first area is used to cache an instance of a function of the hotspot function type on the first computing node, and the second area is used to cache an instance of a function of the non-hotspot function type on the first computing node.

Optionally, the at least one function includes a first function, an instance of the first function is cached in the first area before the primary controller sends the first indication information to the first sub-controller in the plurality of sub-controllers, the first indication information indicates that a type of the first function is the non-hotspot function, and that the first sub-controller performs instance caching on the instance on the first computing node based on the first indication information includes: The first sub-controller transfers the instance of the first function from the first area to the second area. Alternatively, the at least one function includes a second function, an instance of the second function is cached in the second area before the primary controller sends the first indication information to the first sub-controller in the plurality of sub-controllers, the first indication information indicates that a type of the second function is the hotspot function, and that the first sub-controller performs instance caching on the instance on the first computing node based on the first indication information includes: The first sub-controller transfers the instance of the second function from the second area to the first area.

For example, the first function may be the foregoing function #1. The second function may be the foregoing function #2.

Optionally, the method further includes: The primary controller determines a type of a function in the cluster based on a quantity of invocations of the function in the cluster in the cluster, where the function in the cluster includes the at least one function.

Optionally, the method further includes: Upon arrival of an invocation request for a third function, the primary controller determines a third computing node from the cluster based on accumulated hotness of a plurality of computing nodes in the cluster, where the third computing node is configured to create an instance of the third function, and accumulated hotness of each of the plurality of computing nodes is determined based on a quantity of invocations of a function on each computing node in the cluster.

For example, the third function may be the foregoing function #3. The third computing node may be the foregoing computing node #3.

Optionally, the accumulated hotness of each of the plurality of computing nodes is determined based on hotness of a function of the hotspot function type on each computing node and a quantity of instances of the function of the hotspot function type on each computing node, and the hotness of the function of the hotspot function type on each computing node is determined based on a quantity of invocations of the function of the hotspot function type on each computing node in the cluster.

Optionally, a ratio of accumulated hotness of the third computing node to an available resource of the third computing node is less than or equal to a ratio of accumulated hotness of another computing node other than the third computing node in the plurality of computing nodes to an available resource of the another computing node.

Optionally, an instance in the cluster does not include an available instance of the third function.

Optionally, the method further includes: Upon arrival of an invocation request for a third function, a load dispatcher forwards the invocation request for the third function to a fourth computing node in the cluster, where an instance on the fourth computing node includes an available instance of the third function.

For example, the fourth computing node may be the foregoing computing node #4.

Optionally, the method 900 further includes: The first computing node creates an instance of a fourth function, where the first indication information indicates that a type of the instance of the fourth function is the hotspot function. That the first sub-controller performs instance caching on the instance on the first computing node based on the first indication information includes: The first sub-controller caches the instance of the fourth function in the first area.

For example, the fourth function may be the foregoing function #4.

Optionally, the method 900 further includes: The first computing node creates an instance of a fifth function, where the first indication information indicates that a type of the instance of the fifth function is the non-hotspot function. That the first sub-controller performs instance caching on the instance on the first computing node based on the first indication information includes: The first sub-controller caches the instance of the fifth function in the second area.

For example, the fifth function may be the foregoing function #5.

Optionally, the method 900 further includes: The first sub-controller adjusts a quantity of instances of a sixth function on the first computing node based on load of the sixth function. A type of the sixth function is the hotspot function.

The solution in embodiments of this application may be further applied to another cloud field, for example, applied to a field with "hotspot effect", such as a storage service field and an image hosting field. The "hotspot effect" means that most data operations or object operations are concentrated on a small quantity of hotspot data or objects. The centralized control architecture provided in embodiments of this application may be used to manage hotspot data or a hotspot object. For example, a superior resource is preferentially provided for the hotspot data or object, to implement high service performance at low service costs.

The following describes apparatuses in embodiments of this application with reference to FIG. 10 to FIG. 13. It should be understood that the apparatuses described below can perform the methods in the foregoing embodiments of this application. To avoid unnecessary repetition, repeated descriptions are appropriately omitted in the following description of the apparatuses in embodiments of this application.

FIG. 10 is a block diagram of a function cache system according to an embodiment of this application. The system 2000 shown in FIG. 10 may be configured to perform the method shown in FIG. 2 or FIG. 9. The system shown in FIG. 10 may be considered as an example of the system shown in FIG. 6. The system 2000 includes a primary controller and a plurality of sub-controllers.

The primary controller is configured to send first indication information to a first sub-controller in the plurality of sub-controllers, where the first indication information is used to determine a cache policy for an instance on a first computing node in a cluster; the first sub-controller is configured to perform instance caching on the instance on the first computing node based on the first indication information; the primary controller is further configured to send second indication information to a second sub-controller in the plurality of sub-controllers, where the second indication information is used to determine a cache policy for an instance on a second computing node in the cluster; and the second sub-controller is configured to perform instance caching on the instance on the second computing node based on the second indication information.

For specific descriptions of the primary controller and the sub-controller, refer to the foregoing descriptions. To avoid repetition, details are not described herein again.

Both the primary controller and the sub-controller may be implemented by using software, or may be implemented by using hardware. For example, the following describes an implementation of the primary controller by using the primary controller as an example. Similarly, for an implementation of the sub-controller, refer to the implementation of the primary controller.

The primary controller is used as an example of a software functional unit, and the primary controller may include code that is run on a computing instance. The computing instance may include at least one of a physical host (computing device), a virtual machine, and a container. Further, there may be one or more computing instances. For example, the primary controller may include code that is run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers with close geographical locations. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is disposed in one region. For cross-region communication between two VPCs in a same region and between VPCs in different regions, a communication gateway needs to be disposed in each VPC, and interconnection between the VPCs is implemented through the communication gateway.

The primary controller is used as an example of a hardware functional unit, and the primary controller may include at least one computing device, for example, a server. Alternatively, the primary controller may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the primary controller may be distributed in a same region, or may be distributed in different regions. A plurality of computing devices included in the primary controller may be distributed in a same AZ, or may be distributed in different AZs. Similarly, a plurality of computing devices included in the primary controller may be distributed in a same VPC, or may be distributed in a plurality of VPCs. The plurality of computing devices may be any combination of computing devices such as the server, the ASIC, the PLD, the CPLD, the FPGA, and the GAL.

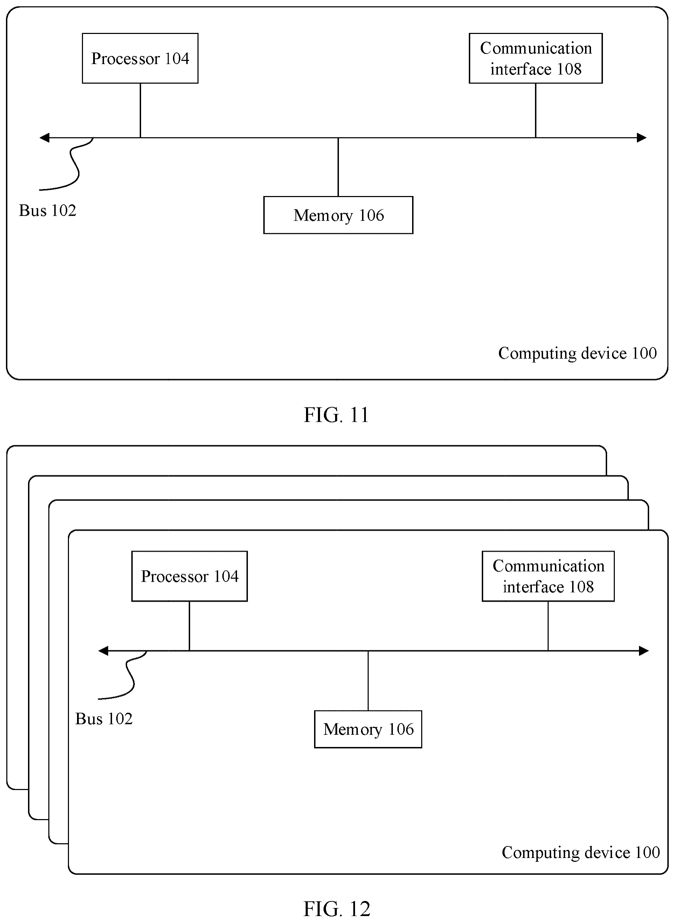

This application further provides a computing device 100. As shown in FIG. 11, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that quantities of processors and memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one line is used for representation in FIG. 11, but this does not mean that there is only one bus or only one type of bus. The bus 104 may include a path for transmitting information between the components (for example, the memory 106, the processor 104, and the communication interface 108) of the computing device 100.

The processor 104 may include any one or more of the following processors: a central processing unit (central processing unit CPU), a graphics processing unit (graphics processing unit, GPU), a microprocessor (microprocessor, MP), a digital signal processor (digital signal processor DSP), or the like.

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a mechanical hard disk drive (hard disk drive, HDD), or a solid state drive (solid state drive, SSD).

The memory 106 stores executable program code, and the processor 104 executes the executable program code to implement functions of the foregoing primary controller and sub-controller, so as to implement the function cache method. In other words, the memory 106 stores instructions used to perform the function cache method.

The communication interface 103 uses a transceiver module, for example, but not limited to, a network interface card or a transceiver, to implement communication between the computing device 100 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 12, the computing device cluster includes at least one computing device 100. The memory 106 in one or more computing devices 100 in the computing device cluster may store same instructions for performing the function cache method.

In some possible implementations, the memory 106 in the one or more computing devices 100 in the computing device cluster may alternatively separately store some instructions for performing the function cache method. In other words, a combination of the one or more computing devices 100 may jointly execute the instructions for performing the function cache method.

It should be noted that the memory 106 in different computing devices 100 in the computing device cluster may store different instructions respectively used to perform some functions of the function cache system. In other words, instructions stored in memory 106 in different computing devices 100 may implement one or more functions of the primary controller and the sub-controller.

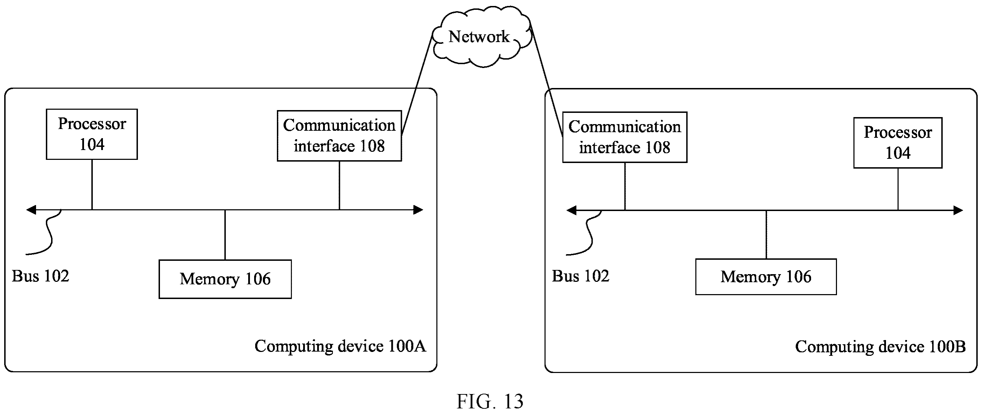

In some possible implementations, the one or more computing devices in the computing device cluster may be connected through a network. The network may be a wide area network, a local area network, or the like. FIG. 13 shows a possible implementation. As shown in FIG. 13, two computing devices 100A and 100B are connected through a network. Specifically, each computing device is connected to the network through a communication interface of the computing device. In this possible implementation, a memory 106 in the computing device 100A stores instructions for performing a function of the primary controller. In addition, a memory 106 in the computing device 100B stores instructions for performing a function of the sub-controller.

It should be understood that a function of the computing device 100A shown in FIG. 13 may also be completed by a plurality of computing devices 100. Similarly, a function of the computing device 100B may also be completed by a plurality of computing devices 100.

An embodiment of this application further provides a computer program product including instructions. The computer program product may be a software or program product that includes instructions and that can run on a computing device or be stored in any usable medium. When the computer program product runs on at least one computing device, the at least one computing device is caused to perform the function cache method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct a computing device to perform the function cache method.

Finally, it should be noted that the foregoing embodiments are merely used to describe the technical solutions of this application, but not limit the technical solutions of this application. Although this application is described in detail with reference to the foregoing embodiments, persons of ordinary skill in the art should understand that they may still modify the technical solutions described in the foregoing embodiments, or perform equivalent replacement on some technical features thereof. However, these modifications or replacements do not make the essence of the corresponding technical solutions depart from the protection scope of the technical solutions in embodiments of this application.

**Claims**

1. A function cache method, wherein the method comprises:

sending, by a primary controller, first indication information to a first sub-controller in a plurality of sub-controllers, wherein the first indication information is used to determine a cache policy for an instance on a first computing node in a cluster;
performing, by the first sub-controller, instance caching on the instance on the first computing node based on the first indication information;
sending, by the primary controller, second indication information to a second sub-controller in the plurality of sub-controllers, wherein the second indication information is used to determine a cache policy for an instance on a second computing node in the cluster; and
performing, by the second sub-controller, instance caching on the instance on the second computing node based on the second indication information.

2. The method according to claim 1, wherein the first sub-controller is deployed on the first computing node, the second sub-controller is deployed on the second computing node, and the primary controller is deployed on a control node in the cluster.

3. The method according to claim 1 or 2, wherein a memory of the first computing node comprises a first area and a second area; and
an instance of a first function on the first computing node is cached in the first area before the primary controller sends the first indication information to the first sub-controller in the plurality of sub-controllers, and performing, by the first sub-controller, instance caching on the instance on the first computing node based on the first indication information comprises:

transferring, by the first sub-controller, the instance of the first function from the first area to the second area; or
an instance of a second function on the first computing node is cached in the second area before the primary controller sends the first indication information to the first sub-controller in the plurality of sub-controllers, and performing, by the first sub-controller, instance caching on the instance on the first computing node based on the first indication information comprises:
transferring, by the first sub-controller, the instance of the second function from the second area to the first area.

4. The method according to claim 3, wherein target cache duration of an instance cached in the first area is greater than target cache duration of an instance cached in the second area.

5. The method according to claim 1 or 2, wherein the cache policy for the instance on the first computing node comprises target cache duration of an instance of at least one function on the first computing node, the first indication information indicates a type of the at least one function, the type of the at least one function comprises a hotspot function or a non-hotspot function, and in the at least one function, target cache duration of an instance of a function of the hotspot function type is greater than target cache duration of an instance of a function of the non-hotspot function type.

6. The method according to claim 5, wherein a memory of the first computing node comprises a first area and a second area, the first area is used to cache an instance of a function of the hotspot function type on the first computing node, and the second area is used to cache an instance of a function of the non-hotspot function type on the first computing node.

7. The method according to claim 6, wherein the at least one function comprises a first function, an instance of the first function is cached in the first area before the primary controller sends the first indication information to the first sub-controller in the plurality of sub-controllers, the first indication information indicates that a type of the first function is the non-hotspot function, and performing, by the first sub-controller, instance caching on the instance on the first computing node based on the first indication information comprises:

transferring, by the first sub-controller, the instance of the first function from the first area to the second area; or
the at least one function comprises a second function, an instance of the second function is cached in the second area before the primary controller sends the first indication information to the first sub-controller in the plurality of sub-controllers, the first indication information indicates that a type of the second function is the hotspot function, and performing, by the first sub-controller, instance caching on the instance on the first computing node based on the first indication information comprises:
transferring, by the first sub-controller, the instance of the second function from the second area to the first area.

8. The method according to any one of claims 5 to 7, wherein the method further comprises:
determining, by the primary controller, a type of a function in the cluster based on a quantity of invocations of the function in the cluster in the cluster, wherein the function in the cluster comprises the at least one function.

9. The method according to any one of claims 1 to 8, wherein the method further comprises:
upon arrival of an invocation request for a third function, determining, by the primary controller, a third computing node from the cluster based on accumulated hotness of a plurality of computing nodes in the cluster, wherein the third computing node is configured to create an instance of the third function, and accumulated hotness of each of the plurality of computing nodes is determined based on a quantity of invocations of a function on each computing node in the cluster.

10. The method according to claim 9, wherein the accumulated hotness of each of the plurality of computing nodes is determined based on hotness of a function of the hotspot function type on each computing node and a quantity of instances of the function of the hotspot function type on each computing node, and the hotness of the function of the hotspot function type on each computing node is determined based on a quantity of invocations of the function of the hotspot function type on each computing node in the cluster.

11. The method according to claim 9 or 10, wherein a ratio of accumulated hotness of the third computing node to an available resource of the third computing node is less than or equal to a ratio of accumulated hotness of another computing node other than the third computing node in the plurality of computing nodes to an available resource of the another computing node.

12. The method according to any one of claims 9 to 11, wherein an instance in the cluster does not comprise an available instance of the third function.

13. The method according to any one of claims 1 to 8, wherein the method further comprises:
upon arrival of an invocation request for a third function, forwarding, by a load dispatcher, the invocation request for the third function to a fourth computing node in the cluster, wherein an instance on the fourth computing node comprises an available instance of the third function.

14. A function cache system, comprising a primary controller and a plurality of sub-controllers, wherein

the primary controller is configured to send first indication information to a first sub-controller in the plurality of sub-controllers, wherein the first indication information is used to determine a cache policy for an instance on a first computing node in a cluster;
the first sub-controller is configured to perform instance caching on the instance on the first computing node based on the first indication information;
the primary controller is further configured to send second indication information to a second sub-controller in the plurality of sub-controllers, wherein the second indication information is used to determine a cache policy for an instance on a second computing node in the cluster; and
the second sub-controller is configured to perform instance caching on the instance on the second computing node based on the second indication information.

15. The system according to claim 14, wherein the first sub-controller is deployed on the first computing node, the second sub-controller is deployed on the second computing node, and the primary controller is deployed on a control node in the cluster.

16. The system according to claim 14 or 15, wherein a memory of the first computing node comprises a first area and a second area; and

an instance of a first function on the first computing node is cached in the first area before the primary controller sends the first indication information to the first sub-controller in the plurality of sub-controllers, and the first sub-controller is specifically configured to transfer the instance of the first function from the first area to the second area; or
an instance of a second function on the first computing node is cached in the second area before the primary controller sends the first indication information to the first sub-controller in the plurality of sub-controllers, and the first sub-controller is specifically configured to transfer the instance of the second function from the second area to the first area.

17. The system according to claim 16, wherein target cache duration of an instance cached in the first area is greater than target cache duration of an instance cached in the second area.

18. The system according to claim 14 or 15, wherein the cache policy for the instance on the first computing node comprises target cache duration of an instance of at least one function on the first computing node, the first indication information indicates a type of the at least one function, the type of the at least one function comprises a hotspot function or a non-hotspot function, and in the at least one function, target cache duration of an instance of a function of the hotspot function type is greater than target cache duration of an instance of a function of the non-hotspot function type.

19. The system according to claim 18, wherein a memory of the first computing node comprises a first area and a second area, the first area is used to cache an instance of a function of the hotspot function type on the first computing node, and the second area is used to cache an instance of a function of the non-hotspot function type on the first computing node.

20. The system according to claim 19, wherein the at least one function comprises a first function, an instance of the first function is cached in the first area before the primary controller sends the first indication information to the first sub-controller in the plurality of sub-controllers, the first indication information indicates that a type of the first function is the non-hotspot function, and the first sub-controller is specifically configured to transfer the instance of the first function from the first area to the second area; or
the at least one function comprises a second function, an instance of the second function is cached in the second area before the primary controller sends the first indication information to the first sub-controller in the plurality of sub-controllers, the first indication information indicates that a type of the second function is the hotspot function, and the first sub-controller is specifically configured to transfer the instance of the second function from the second area to the first area.

21. The system according to any one of claims 18 to 20, wherein the primary controller is further configured to:
determine a type of a function in the cluster based on a quantity of invocations of the function in the cluster in the cluster, wherein the function in the cluster comprises the at least one function.

22. The system according to any one of claims 14 to 21, wherein the primary controller is further configured to:
upon arrival of an invocation request for a third function, determine a third computing node from the cluster based on accumulated hotness of a plurality of computing nodes in the cluster, wherein the third computing node is configured to create an instance of the third function, and accumulated hotness of each of the plurality of computing nodes is determined based on a quantity of invocations of a function on each computing node in the cluster.

23. The system according to claim 22, wherein the accumulated hotness of each of the plurality of computing nodes is determined based on hotness of a function of the hotspot function type on each computing node and a quantity of instances of the function of the hotspot function type on each computing node, and the hotness of the function of the hotspot function type on each computing node is determined based on a quantity of invocations of the function of the hotspot function type on each computing node in the cluster.

24. The system according to claim 22 or 23, wherein a ratio of accumulated hotness of the third computing node to an available resource of the third computing node is less than or equal to a ratio of accumulated hotness of another computing node other than the third computing node in the plurality of computing nodes to an available resource of the another computing node.

25. The system according to any one of claims 22 to 24, wherein an instance in the cluster does not comprise an available instance of the third function.

26. The system according to any one of claims 14 to 21, wherein the system further comprises a load dispatcher, configured to:
upon arrival of an invocation request for a third function, forward the invocation request for the third function to a fourth computing node in the cluster, wherein an instance on the fourth computing node comprises an available instance of the third function.

27. A computing device cluster, comprising at least one computing device, wherein each computing device comprises a processor and a memory; and
a processor of the at least one computing device is configured to execute instructions stored in the memory of the at least one computing device, to cause the computing device cluster to perform the method according to any one of claims 1 to 13.

28. A computer-readable storage medium, comprising computer program instructions, wherein when the computer program instructions are executed by a computing device cluster, the computing device cluster performs the method according to any one of claims 1 to 13.

29. A computer program product comprising instructions, wherein when the instructions are run by a computing device cluster, the computing device cluster is caused to perform the method according to any one of claims 1 to 13.

Load
imbalance

Workload

Cache

S0    S1    ...    Sn

■ Load of a hotspot
   function

▨ Load of a non-hotspot
   function

■ Instance of a hotspot
   function

▨ Idle instance

▨ Instance in use

☐ Resource on which no
   instance is cached

FIG. 1

<u>200</u>

Cache an instance of a function #21 based on target cache duration of the
instance of the function #21 ⟶ 210

Cache an instance of a function #22 based on target cache duration of the
instance of the function #22, where the target cache duration of the instance
of the function #21 is greater than the target cache duration of the instance of
the function #22, hotness of the function #22 is less than hotness of the
function #21, the hotness of the function #21 is based on a quantity of
executions of the function #21, and the hotness of the function #22 is based
on a quantity of executions of the function #22 ⟶ 220

FIG. 2

Counting cycle

Access request
quantity (relative)

0.75
0.55
0.5
0.25

t0    t1    t2    t3    t4    t5    t6    t7    t8    t9

Time

FIG. 3

Reserved
memory

Computing
node #A

Computing
node #B

☐ Unused area

▨ Second area

▨ First area

FIG. 4

Unused area

Second area

First area

Creation of an
instance of a
non-hotspot
function

Creation of an
instance of a
hotspot function

Release or eviction

Hotspot update

Hotspot update

FIG. 5

Cache control system 600

Primary
controller 610

Sub-controller
620

Sub-controller
620

...

Sub-controller
620

FIG. 6

FIG. 7

FIG. 8

900

| A primary controller sends first indication information to a first sub-controller in a plurality of sub-controllers, where the first indication information indicates a cache policy for an instance on a first computing node in a cluster | 910 |

| The first sub-controller performs instance caching on the instance on the first computing node based on the first indication information | 920 |

| The primary controller sends second indication information to a second sub-controller in the plurality of sub-controllers, where the second indication information indicates a cache policy for an instance on a second computing node in the cluster | 930 |

| The second sub-controller performs instance caching on the instance on the second computing node based on the second indication information | 940 |

FIG. 9

System 2000

Primary controller

First sub-controller

Second sub-controller

FIG. 10

Processor 104

Communication interface 108

Bus 102

Memory 106

Computing device 100

FIG. 11

Processor 104

Communication interface 108

Bus 102

Memory 106

Computing device 100

FIG. 12

FIG. 13

## INTERNATIONAL SEARCH REPORT

| International application No. |
| --- |
| **PCT/CN2024/078364** |

| **A.** | **CLASSIFICATION OF SUBJECT MATTER** |
| --- | --- |
| | G06F 9/50(2006.01)i |

According to International Patent Classification (IPC) or to both national classification and IPC

| **B.** | **FIELDS SEARCHED** |
| --- | --- |

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 函数, 实例, 缓存, 冷启动, 集群, 节点, 控制, 策略, 存储, 热, 冷, 冗余, function, instance, cache, cold start, cold boot, cluster, node, controller, strategy, store, hot, redundant

| **C.** | **DOCUMENTS CONSIDERED TO BE RELEVANT** | |
| --- | --- | --- |
| Category* | Citation of document, with indication, where appropriate, of the relevant passages | Relevant to claim No. |
| PX | YANG, Yanan et al. "Flame: A Centralized Cache Controller for Serverless Computing" *ASPLOS '23: Proceedings of the 28th ACM International Conference on Architectural Support for Programming Languages and Operating Systems*, 29 March 2023 (2023-03-29), pages 153-168 | 1-29 |
| Y | CN 111475235 A (BEIJING BYTEDANCE NETWORK TECHNOLOGY CO., LTD.) 31 July 2020 (2020-07-31) description, paragraphs [0057]-[0116] | 1-29 |
| Y | CN 114500529 A (AEROSPACE SCIENCE AND INDUSTRY NETWORK INFORMATION DEVELOPMENT CO., LTD.) 13 May 2022 (2022-05-13) description, paragraphs [0029]-[0086] | 1-29 |
| Y | WO 2022028165 A1 (ZTE CORP.) 10 February 2022 (2022-02-10) description, pages 2-7 | 1-29 |
| A | CN 110569233 A (HUAWEI TECHNOLOGIES CO., LTD.) 13 December 2019 (2019-12-13) entire document | 1-29 |
| A | CN 111427969 A (TSINGHUA UNIVERSITY et al.) 17 July 2020 (2020-07-17) entire document | 1-29 |

☑ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 May 2024** | **17 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/078364** |

### C. DOCUMENTS CONSIDERED TO BE RELEVANT

| Category* | Citation of document, with indication, where appropriate, of the relevant passages | Relevant to claim No. |
| --- | --- | --- |
| A | CN 112685670 A (HUAWEI TECHNOLOGIES CO., LTD.) 20 April 2021 (2021-04-20)<br>entire document | 1-29 |
| A | US 2021263779 A1 (INTEL CORPORATION) 26 August 2021 (2021-08-26)<br>entire document | 1-29 |

Form PCT/ISA/210 (second sheet) (July 2022)

**INTERNATIONAL SEARCH REPORT**
Information on patent family members

International application No.

**PCT/CN2024/078364**

| Patent document cited in search report | | | Publication date (day/month/year) | Patent family member(s) | | | Publication date (day/month/year) |
|---|---|---|---|---|---|---|---|
| CN | 111475235 | A | 31 July 2020 | None | | | |
| CN | 114500529 | A | 13 May 2022 | None | | | |
| WO | 2022028165 | A1 | 10 February 2022 | CN | 114079671 | A | 22 February 2022 |
| CN | 110569233 | A | 13 December 2019 | US | 2022121384 | A1 | 21 April 2022 |
| | | | | US | 11886731 | B2 | 30 January 2024 |
| | | | | WO | 2021000698 | A1 | 07 January 2021 |
| CN | 111427969 | A | 17 July 2020 | None | | | |
| CN | 112685670 | A | 20 April 2021 | None | | | |
| US | 2021263779 | A1 | 26 August 2021 | US | 11922220 | B2 | 05 March 2024 |
| | | | | DE | 112019005604 | T5 | 09 September 2021 |
| | | | | WO | 2020096639 | A1 | 14 May 2020 |
| | | | | JP | 2022511177 | A | 31 January 2022 |
| | | | | JP | 7327744 | B2 | 16 August 2023 |
| | | | | KR | 20210076882 | A | 24 June 2021 |
| | | | | EP | 3877854 | A1 | 15 September 2021 |
| | | | | EP | 3877854 | A4 | 10 August 2022 |
| | | | | CN | 112955869 | A1 | 11 June 2021 |

Form PCT/ISA/210 (patent family annex) (July 2022)

**REFERENCES CITED IN THE DESCRIPTION**

**Patent documents cited in the description**

- CN 202310231686

- CN 202310745731